(19) Europäisches Patentamt
European Patent Office
Office européen des brevets

(11) **EP 2 685 722 A2**

(12) **EUROPEAN PATENT APPLICATION**
published in accordance with Art. 153(4) EPC

(43) Date of publication:
**15.01.2014 Bulletin 2014/03**

(21) Application number: **12756989.5**

(22) Date of filing: **12.03.2012**

(51) Int Cl.:
***H04N 7/32*** *(2006.01)*

(86) International application number:
**PCT/KR2012/001793**

(87) International publication number:
**WO 2012/124961 (20.09.2012 Gazette 2012/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2011 US 201161451789 P**

(71) Applicant: **Samsung Electronics Co., Ltd.**
**Suwon-si, Gyeonggi-do 443-742 (KR)**

(72) Inventors:
• **LEE, Tammy**
  **Seoul 137-070 (KR)**
• **PARK, Young-o**
  **Seoul 137-793 (KR)**

(74) Representative: **Brandon, Paul Laurence**
**Appleyard Lees**
**15 Clare Road**
**Halifax, HX1 2HY (GB)**

(54) **METHOD AND APPARATUS FOR ENCODING IMAGES AND METHOD AND APPARATUS FOR DECODING IMAGES**

(57) Provided are a method and apparatus for encoding and decoding motion information of a current prediction unit that is motion-predicted. The image encoding method includes: obtaining a first reference picture list, a second reference picture list, and a combination reference picture list which is a combination of reference pictures included in the first reference picture list and reference pictures included in the second reference picture list; and encoding a reference syntax indicating a motion prediction mode and a reference picture used in encoding of a current prediction unit based on a number of cases of a unidirectional motion prediction mode and a number of cases of a bidirectional motion prediction mode.

FIG. 19

START

OBTAIN FIRST REFERENCE PICTURE LIST, SECOND REFERENCE PICTURE LIST, AND COMBINATION REFERENCE PICTURE LIST WHICH IS PICTURE LIST AND REFERENCE PICTURES INCLUDED IN FIRST REFERENCE PICTURE LIST AND REFERENCE PICTURES INCLUDED IN SECOND REFERENCE PICTURE LIST — 1910

ENCODE CURRENT PREDICTION UNIT USING ONE OF UNIDIRECTIONAL MOTION PREDICTION MODE WHERE UNIDIRECTIONAL MOTION PREDICTION WITH RESPECT TO A CURRENT PREDICTION UNIT IS PERFORMED BY USING A REFERENCE PICTURE INCLUDED IN THE COMBINATION REFERENCE PICTURE LIST AND BIDIRECTIONAL MOTION PREDICTION MODE WHERE BIDIRECTIONAL MOTION PREDICTION WITH RESPECT TO CURRENT PREDICTOIN UNIT IS PERFORMED BY USING THE FIRST REFERENCE PICTURE LIST AND THE SECOND REFERENCE PICTURE LIST — 1920

ENCODE REFERENCE SYNTAX INDICATING MOTION PREDICTION MODE AND REFERENCE PICTURE USED IN ENCODING OF CURRENT PREDICTION UNIT BASED ON NUMBER OF CASES OF UNIDIRECTIONAL MOTION PREDICTION MODE AND NUMBER OF CASES OF BIDIRECTIONAL MOTION PREDICTION MODE — 1930

END

**Description**

[Technical Field]

The present invention relates to methods and apparatuses for encoding and decoding a still image and a video, and more particularly, to methods and apparatuses for encoding and decoding motion information of a current prediction unit.

[Background Art]

According to a codec such as MPEG-4 H.264/MPEG-4 advanced video coding (AVC), prediction mode information indicating a direction of motion of a current block during motion prediction and reference picture information used in motion prediction of the current block are encoded by using a separate syntax.

[Disclosure]

[Technical Problem]

The present invention provides methods and apparatuses for encoding and decoding motion prediction mode information of a current prediction unit and reference picture information used in motion prediction, by using a single syntax.

[Technical Solution]

According to embodiments of the present invention, a method and apparatus for encoding motion prediction mode information and reference picture information by using a single reference syntax is provided.

[Advantageous Effects]

According to embodiments of the present invention, prediction direction (prediction mode) information and reference picture information used for a current prediction unit may be efficiently encoded by using a single reference syntax, thereby improving compression efficiency of an image.

[Description of Drawings]

FIG. 1 is a block diagram of a video encoding apparatus according to an embodiment of the present invention;
FIG. 2 is a block diagram of a video decoding apparatus according to an embodiment of the present invention;
FIG. 3 is a diagram for describing a concept of coding units according to an embodiment of the present invention;
FIG. 4 is a block diagram of a video encoder based on coding units having a hierarchical structure, according to an embodiment of the present invention;
FIG. 5 is a block diagram of a video decoder based on coding units having a hierarchical structure, according to an embodiment of the present invention;
FIG. 6 is a diagram illustrating deeper coding units according to depths, and partitions, according to an embodiment of the present invention;
FIG. 7 is a diagram for describing a relationship between a coding unit and transformation units, according to an embodiment of the present invention;
FIG. 8 is a diagram for describing encoding information of coding units corresponding to a coded depth, according to an embodiment of the present invention;
FIG. 9 is a diagram of deeper coding units according to depths, according to an embodiment of the present invention;
FIGS. 10 through 12 are diagrams for describing a relationship between coding units, prediction units, and frequency transformation units, according to an embodiment of the present invention;
FIG. 13 is a diagram for describing a relationship between a coding unit, a prediction unit, and a transformation unit, according to encoding mode information of Table 1;
FIG. 14 is a diagram illustrating an example of a reference picture referred to by a prediction unit in a B picture, according to an embodiment of the present invention;
FIGS. 15A through 15C illustrates an example of a reference picture index allocated to a reference picture, according to an embodiment of the present invention;

FIGS. 16A and 16B illustrate a combination reference picture list used in unidirectional prediction according to embodiments of the present invention;

FIG. 17 illustrates a table showing reference syntax values indicating unidirectional and bidirectional motion prediction modes and reference pictures, allocated based on a number of cases of unidirectional motion prediction modes and a number of cases of bidirectional motion prediction modes, according to an embodiment of the present invention;

FIG. 18 illustrates an example of a process of binarizing reference syntax information according to an embodiment of the present invention;

FIG. 19 is a flowchart illustrating an image encoding method according to an embodiment of the present invention; and

FIG. 20 is a flowchart illustrating an image decoding method according to an embodiment of the present invention.

[Best Mode]

According to an aspect of the present invention, there is provided an image encoding method comprising: obtaining a first reference picture list, a second reference picture list, and a combination reference picture list which is a combination of reference pictures included in the first reference picture list and reference pictures included in the second reference picture list; encoding a current prediction unit by using one of a unidirectional prediction mode in which unidirectional prediction is performed with respect to the current prediction unit by using a reference picture included in the combination reference picture list and a bidirectional prediction mode in which bidirectional motion prediction is performed with respect to the current prediction unit by using the first reference picture list and the second reference picture list; and encoding a reference syntax indicating a motion prediction mode and a reference picture used in encoding of the current prediction unit based on a number of cases of the unidirectional motion prediction mode and a number of cases of the bidirectional motion prediction mode.

According to another aspect of the present invention, there is provided an image encoding apparatus, comprising: a motion prediction unit for predicting a current prediction unit by using one of a unidirectional prediction mode where unidirectional motion prediction with respect to a current prediction unit is performed by using a reference picture included in a combination reference picture list in which reference pictures of a first reference picture list and reference pictures of a second reference picture list are combined, and a bidirectional motion prediction mode where bidirectional motion prediction with respect to the current prediction unit is performed by using the first reference picture list and the second reference picture list; and an entropy encoder for encoding a reference syntax indicating a motion prediction mode and a reference picture used in encoding of the current prediction unit based on a number of cases of the unidirectional motion prediction mode and a number of cases of the bidirectional motion prediction mode.

According to another aspect of the present invention, there is provided an image decoding method comprising: obtaining a first reference picture list, a second reference picture list, and a combination reference picture list which is a combination of reference pictures included in the first reference picture list and reference pictures included in the second reference picture list; determining a value of a reference syntax according to a motion prediction mode and reference pictures used in encoding of a current prediction unit based on a number of cases of a unidirectional motion prediction mode where reference pictures included in the combination reference list are used and a number of cases of a bidirectional motion prediction mode where the first reference picture list and the second reference picture list are used; obtaining a reference syntax of the current prediction unit from a bitstream; determining a motion prediction mode and a reference picture of the current prediction unit by using a value of the obtained reference syntax; and performing motion compensation with respect to the current prediction unit by using the determined motion prediction mode and the determined reference picture..

According to another aspect of the present invention, there is provided an image decoder comprising: an entropy decoder for obtaining a first reference picture list, a second reference picture list, and a combination reference picture list which is a combination of reference pictures included in the first reference picture list and reference pictures included in the second reference picture list, determining a value of a reference syntax according to a motion prediction mode and reference pictures used in encoding of a current prediction unit based on a number of cases of a unidirectional motion prediction mode where reference pictures included in the combination reference list are used and a number of cases of a bidirectional motion prediction mode where the first reference picture list and the second reference picture list are used, and determining a motion prediction mode and a reference picture of the current prediction unit by using a reference syntax of the current prediction unit obtained from the bitstream; and a motion compensation unit for performing motion compensation with respect to the current prediction unit by using the determined motion prediction mode and the determined reference picture.

[Mode for Invention]

Hereinafter, embodiments of the present invention will be described in detail with reference to the attached drawings

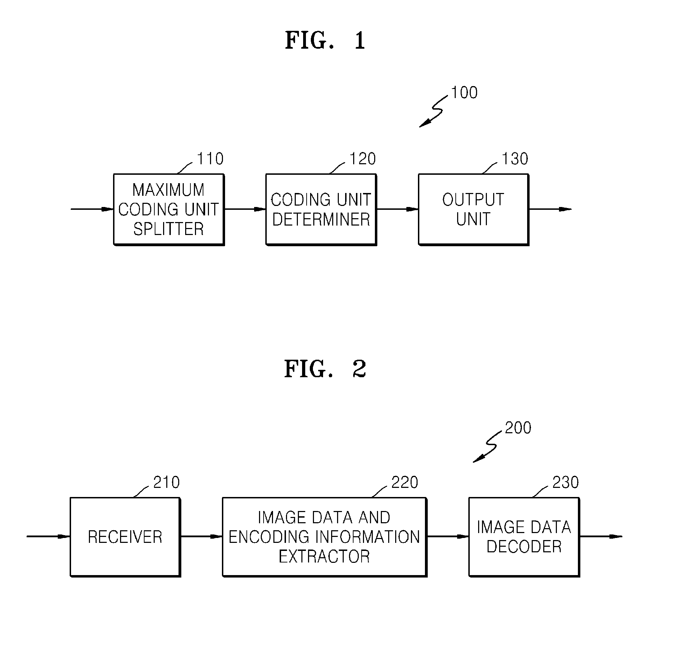

FIG. 1 is a block diagram of a video encoding apparatus 100 according to an embodiment of the present invention.

The video encoding apparatus 100 includes a maximum coding unit splitter 110, a coding unit determiner 120, and an output unit 130.

The maximum coding unit splitter 110 may split a current picture of an image based on a maximum coding unit, which is a coding unit of a maximum size. If the current picture is larger than a maximum coding unit, image data of the current picture may be split into at least one maximum coding unit. The maximum coding unit according to an embodiment of the present invention may be a data unit having a size of 32x32, 64x64, 128x128, 256x256, etc., wherein a shape of the data unit is a square which has width and length in squares of 2 and is greater than 8. Image data may be output to the coding unit determiner 120 in units of at least one maximum coding unit.

A coding unit according to an embodiment of the present invention may be characterized by a maximum size and a depth. The depth denotes the number of times the coding unit is spatially split from the maximum coding unit, and as the depth deepens, deeper coding units may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to  depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to maximum encoders are output to the output unit 130.

The image data in the maximum coding unit is encoded based on the deeper coding units corresponding to at least one depth equal to or smaller than the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths and as the number of coding units increases. Also, even if coding units correspond to a same depth in one maximum coding unit, it is determined whether to split each of the coding units corresponding to the same depth to a lower depth by measuring an encoding error of the image data of each coding unit, separately. Accordingly, even when image data is included in one maximum coding unit, the image data is split into regions according to the depths, and the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in a current maximum coding unit. The 'coding units having a tree structure' according to an embodiment of the present invention include coding units corresponding to a depth determined to be the coded depth, from among all deeper coding units included in the maximum coding unit. A coding unit having a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of times splitting is performed from a maximum coding unit to a minimum coding unit. A first maximum depth according to an embodiment of the present invention may denote the total number of times splitting is performed from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, five depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in at least one maximum coding unit.

The video encoding apparatus 100 may variously select a size or shape of a data unit for encoding the image data. In order to encode the image data, operations such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split into coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit.

For example, when a coding unit of 2Nx2N (where N is a positive integer) is no longer split and becomes a prediction unit of 2Nx2N, a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, an inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having the least encoding error.

The video encoding apparatus 100 may also perform the transformation on the image data in a coding unit based not only on the coding unit for encoding the image data, but also based on a data unit that is different from the coding unit.

In order to perform the transformation in the coding unit, the transformation may be performed based on a data unit having a size smaller than or equal to the coding unit. For example, the data unit for the transformation may include a data unit for an intra mode and a data unit for an inter mode.

A data unit used as a base of the transformation will now be referred to as a 'transformation unit'. Similarly to the coding unit, the transformation unit in the coding unit may be recursively split into smaller sized regions, so that the transformation unit may be determined independently in units of regions. Thus, residual data in the coding unit may be divided according to the transformation unit having the tree structure according to transformation depths.

A transformation depth indicating the number of times splitting is performed to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of a transformation unit is NXN, and may be 2 when the size of a transformation unit is N/2XN/2. That is, the transformation unit having the tree structure may also be set according to transformation depths.

Encoding information according to coding units corresponding to a coded depth requires not only information about the coded depth, but also about information related to prediction encoding and transformation. Accordingly, the coding unit determiner 120 not only determines a coded depth having the least encoding error, but also determines a partition type in a prediction unit, a prediction mode according to prediction units, and a size of a transformation unit for transformation.

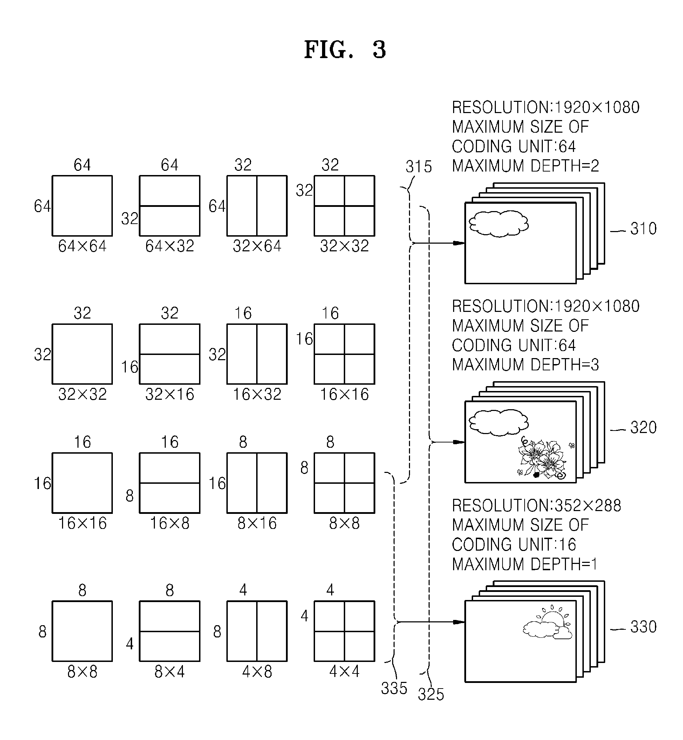

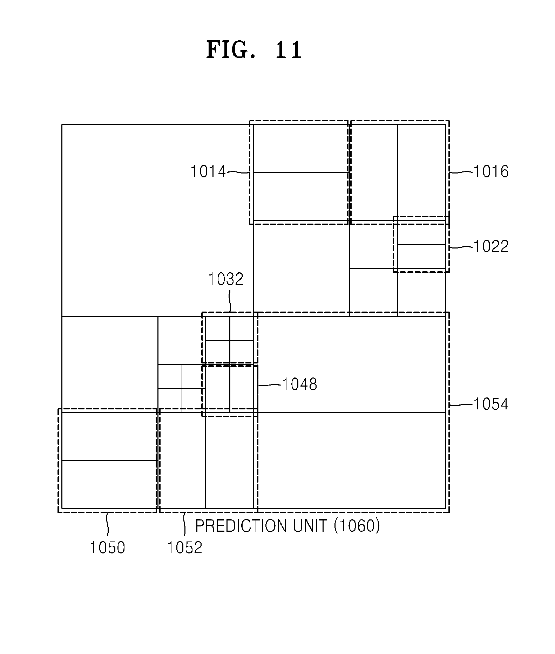

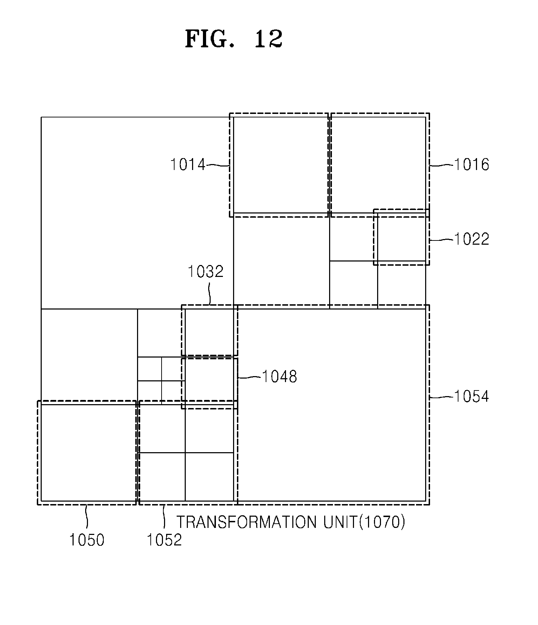

Coding units according to a tree structure in a maximum coding unit and a method of determining a partition, according to embodiments of the present invention, will be described in detail later with reference to FIGS. 3 through 12.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bit streams. The encoded image data may be a coding result of residual data of an image. The information about the encoding mode according to the coded depth may include information about the coded depth, information about the partition type in the prediction unit, prediction mode information, and size information of the transformation unit. In particular, as will be described later, when entropy encoding a syntax element indicating a size of a transformation unit, the output unit 130 binarizes a syntax element indicating a size of a transformation but according to bit strings by using the parameter which is gradually updated. The operation of entropy encoding a transformation unit by using the output unit 130 will be described later.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an embodiment of the present invention is a square-shaped data unit obtained by splitting the minimum coding unit constituting the lowermost depth by 4. Alternatively, the minimum unit may be a maximum square-shaped data unit that may be included in all of the coding units, prediction units, partition units, and transformation units included in the maximum coding unit.

For example, the encoding information output through the output unit 130 may be classified into encoding information according to coding units and encoding information according to prediction units. The encoding information according to the coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode. Also, information about a maximum size of the coding unit defined according to pictures, slices, or GOPs, and information about a maximum depth may be inserted into a header of a bit stream.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit of the current depth having the size of 2Nx2N may include a maximum number of four coding units of the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, a number of macroblocks per picture excessively increases. Accordingly, a number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

FIG. 2 is a block diagram of a video decoding apparatus 200 according to an embodiment of the present invention.

The video decoding apparatus 200 includes a receiver 210, an image data and encoding information extractor 220, and an image data decoder 230. Definitions of various terms, such as a coding unit, a depth, a prediction unit, a transformation unit, and information about various encoding modes, for various operations of the video decoding apparatus 200 are identical to those described with reference to FIG. 1 and the video encoding apparatus 100.

The receiver 210 receives a bit stream of an encoded video to parse a syntax element. The image data and encoding information extractor 220 extracts syntax elements indicating encoded image data based on coding units having a structure by performing entropy decoding of parsed syntax elements, and outputs the extracted syntax elements to the image data decoder 230. That is, the image data and encoding information extractor 220 performs entropy decoding of syntax elements that are received in the form of bit strings of 0 and 1, thereby restoring the syntax elements.

Also, the image data and encoding information extractor 220 extracts information about a coded depth, an encoding mode, color component information, prediction mode information, etc. for the coding units having a tree structure according to each maximum coding unit, from the parsed bitstream. The extracted information about the coded depth and the encoding mode is output to the image data decoder 230. The image data in a bit stream is split into the maximum coding unit so that the image data decoder 230 may decode the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. When information about a coded depth and encoding mode of a corresponding maximum coding unit is assigned to each of predetermined data units, the predetermined data units to which the same information about the coded depth and the encoding mode is assigned may be inferred to be the data units included in the same maximum coding unit.

Also, as will be described later, the image data and encoding information extractor 220 de-binarizes a syntax element indicating a size of a transformation coefficient by using a parameter that is gradually updated. An operation of obtaining size information of a transformation coefficient by using the image data and encoding information extractor 220 by de-binarizing a bit string corresponding to a syntax element indicating a size of a transformation unit will be described in detail later.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include prediction including intra prediction and motion compensation, and inverse transformation.

The image data decoder 230 may perform intra prediction or motion compensation according to a partition and a prediction mode of each coding unit, based on the information about the partition type and the prediction mode of the prediction unit of the coding unit according to coded depths.

Also, the image data decoder 230 may perform inverse transformation according to each transformation unit in the coding unit, based on the information about the size of the transformation unit of the coding unit according to coded depths, so as to perform the inverse transformation according to maximum coding units.

The image data decoder 230 may determine at least one coded depth of a current maximum coding unit by using split information according to depths. If the split information indicates that image data is no longer split in the current depth, the current depth is a coded depth. Accordingly, the image data decoder 230 may decode the coding unit of the current depth with respect to the image data of the current maximum coding unit by using the information about the partition type of the prediction unit, the prediction mode, and the size of the transformation unit.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode.

The video decoding apparatus 200 may obtain information about at least one coding unit that generates the minimum encoding error when encoding is recursively performed for each maximum coding unit, and may use the information to decode the current picture. In other words, encoded image data of the coding units having the tree structure determined to be the optimum coding units in each maximum coding unit may be decoded.

Accordingly, even if image data has a high resolution and a large amount of data, the image data may be efficiently decoded and restored by using a size of a coding unit and an encoding mode, which are adaptively determined according to characteristics of the image data, by using information about an optimum encoding mode received from an encoder.

A method of determining coding units having a tree structure, a prediction unit, and a transformation unit, according to an embodiment of the present invention, will now be described with reference to FIGS. 3 through 13.

FIG. 3 is a diagram for describing a concept of hierarchical coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32; and a coding unit of 32x32 may be split into partitions of 32x32, 32x16, 16x32, or 16x16; a coding unit of 16x16 may be split into partitions of 16x16, 16x8, 8x16, or 8x8; and a coding unit of 8x8 may be split into partitions of 8x8, 8x4, 4x8, or 4x4.

Regarding video data 310, a resolution of 1920x1080, a maximum size of a coding unit of 64, and a maximum depth of 2 are set. Regarding video data 320, a resolution of 1920x1080, a maximum size of a coding unit of 64, and a maximum depth of 3 are set. Regarding video data 330, a resolution of 352x288, a maximum size of a coding unit of 16, and a maximum depth of 1 are set. The maximum depth shown in FIG. 3 denotes a total number of splits from a maximum coding unit to a minimum coding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

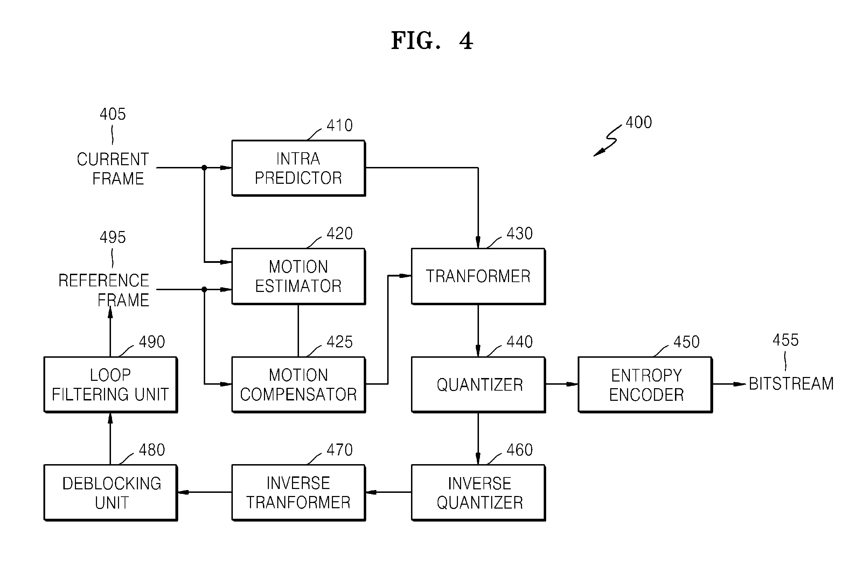

FIG. 4 is a block diagram of a video encoder 400 based on coding units, according to an embodiment of the present invention.

The video encoder 400 includes operations performed in the coding unit determiner 120 of the video encoding apparatus 100 to encode image data. That is, an intra predictor 410 performs intra prediction on coding units in an intra mode, with respect to a current frame 405, and a motion estimator 420 and a motion compensator 425 respectively perform inter estimation and motion compensation on coding units in an inter mode by using the current frame 405 and a reference frame 495.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and a loop filtering unit 490. The quantized transformation coefficient may be output as a bitstream 455 through an entropy encoder 450.

In order for the video encoder 400 to be applied in the video encoding apparatus 100, all elements of the video encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the loop filtering unit 490, have to perform operations based on each coding unit from among coding units having a tree structure while considering the maximum depth of each maximum coding unit.

Specifically, the intra predictor 410, the motion estimator 420, and the motion compensator 425 determine partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

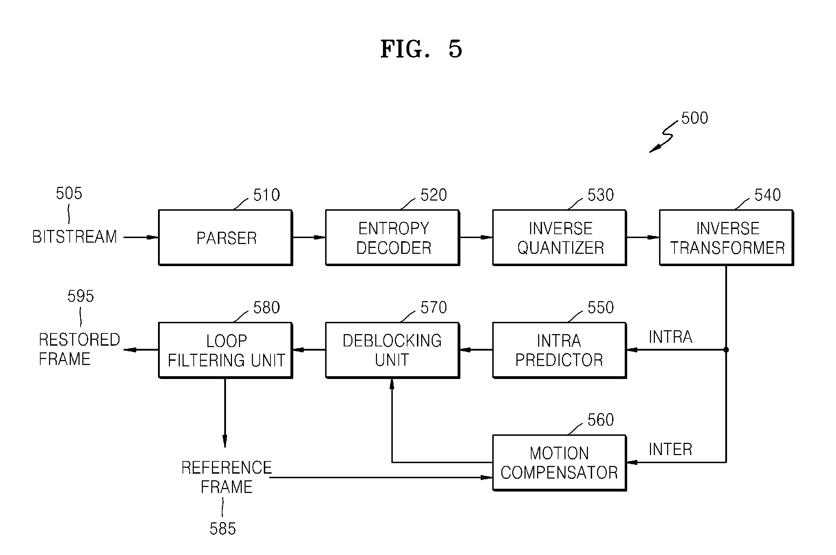

FIG. 5 is a block diagram of a video decoder 500 based on coding units, according to an embodiment of the present invention.

A parser 510 parses encoded image data to be decoded and information about encoding required for decoding, from a bitstream 505. The encoded image data passes through the decoder 520 and the inverse quantizer 530 to be output as inversely quantized data. An inverse transformer 540 restores the inversely quantized data to image data in a spatial domain. An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which has passed through the intra predictor 550 and the motion compensator 560, may be output as a restored frame 595 after being post-processed through a deblocking unit 570 and a loop filtering unit 580. Also, the image data, which is post-processed through the deblocking unit 570 and the loop filtering unit 580, may be output as the reference frame 585.

In order for the video decoder 500 to be applied in the video decoding apparatus 200, all elements of the video decoder 500, i.e., the parser 510, the entropy decoder 520, the inverse quantizer 530, the inverse transformer 540, the intra predictor 550, the motion compensator 560, the deblocking unit 570, and the loop filtering unit 580, perform operations based on coding units having a tree structure for each maximum coding unit.

The intra predictor 550 and the motion compensator 560 determine a partition and a prediction mode for each coding unit having a tree structure, and the inverse transformer 540 has to determine a size of a transformation unit for each coding unit.

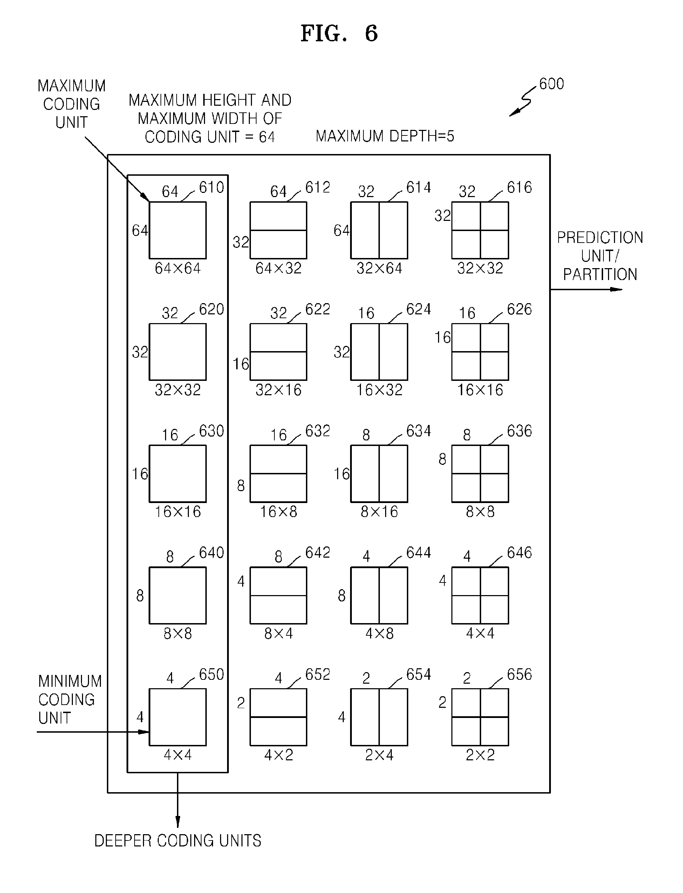

FIG. 6 is a diagram illustrating deeper coding units according to depths, and partitions, according to an embodiment of the present invention.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units according to an embodiment of the present invention, the maximum height and the maximum width of the coding units are each 64, and the maximum depth is 4. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, a coding unit 640 having a size of 8x8 and a depth of 3, and a coding unit 650 having a size of 4x4 and a depth of 4 exist. The coding unit 650 having the size of 4x4 and the depth of 4 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions included in the encoder 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

The coding unit 650 having the size of 4x4 and the depth of 4 is the minimum coding unit and a coding unit of the lowermost depth. A prediction unit of the coding unit 650 is only assigned to a partition having a size of 4x4.

In order to determine the at least one coded depth of the coding units constituting the maximum coding unit 610, the coding unit determiner 120 of the video encoding apparatus 100 performs encoding for coding units corresponding to each depth included in the maximum coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths and performing encoding for each depth as the depth deepens along the vertical axis of the hierarchical structure 600. A depth and a partition having the minimum encoding error in the maximum coding unit 610 may be selected as the coded depth and a partition type of the maximum coding unit 610.

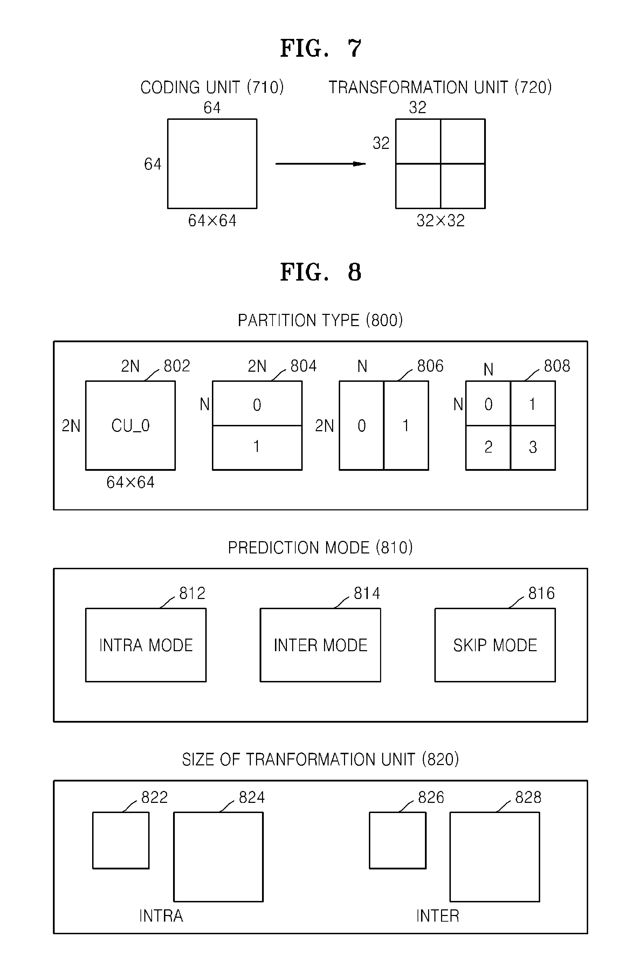

FIG. 7 is a diagram for describing a relationship between a coding unit 710 and transformation units 720, according to an embodiment of the present invention.

The video encoding apparatus 100 or the video decoding apparatus 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 8 is a diagram for describing encoding information of coding units corresponding to a coded depth, according to an embodiment of the present invention.

The output unit 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 802 having a size of 2Nx2N, the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding data extracting unit 210 of the video decoding apparatus 200 may extract and use the information 800 information about coding units, the information 810 about a prediction mode, and the information 820 about a size of a transformation unit, for decoding, according to each deeper coding unit.

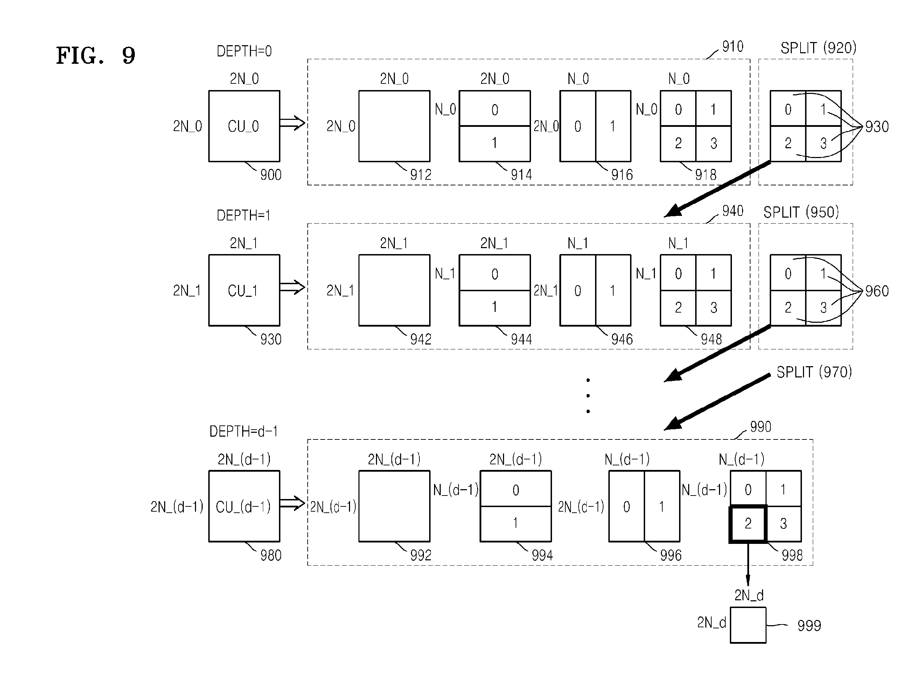

FIG. 9 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding of a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is the smallest in one of the partition types 912 through 916 having the sizes of 2N_0x2N_0, 2N_0xN_0, and N_0x2N_0, the prediction unit 910 may not be split into a lower depth.

If the encoding error is the smallest in the partition type 918 having the size of N_0xN_0, a depth is changed from 0 to 1 to split the partition type 918 in operation 920, and encoding is repeatedly performed on partition type coding units having a depth of 2 and a size of N_0xN_0 to search for a minimum encoding error.

A prediction unit 940 for prediction encoding of the (partition type) coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948 having the size of N_1XN_1, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, a split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 having the size of N_(d-1)xN_(d-1) has the minimum encoding error, since a maximum depth is d, a coding unit CU_(d-1) having a depth of d-1 is no longer split to a lower depth, and a coded depth for the coding units constituting the current maximum coding unit 900 is determined to be d-1 and a partition type of the current maximum coding unit 900 may be determined to be N_(d-1)xN_(d-1). Also, since the maximum depth is d, split information for the minimum coding unit 952 is not set.

A data unit 999 may be a 'minimum unit' for the current maximum coding unit. A minimum unit according to an embodiment of the present invention may be a rectangular data unit obtained by splitting the minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the coding unit 912. The video decoding apparatus 200 may determine a depth, in which split information is 0, as a coded depth by using split information according to depths, and use information about an encoding mode of the corresponding depth for decoding.

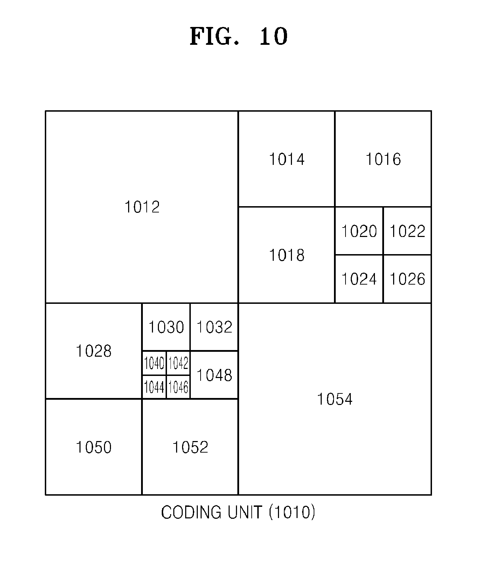

FIGS. 10 through 12 are diagrams for describing a relationship between coding units 1010, prediction units 1060, and transformation units 1070 according to an embodiment of the present invention.

The coding units 1010 are coding units having a tree structure, corresponding to coded depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some coding units 1014, 1016, 1022, 1032, 1048, 1050, 1052, and 1054 are obtained by splitting the coding units. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, 1052, and 1054 in the transformation units 1070 are different from those in the prediction units 1060 in terms of sizes and shapes. In other words, the video encoding apparatus 100 and the video decoding apparatus 200 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit.

Table 1 shows the encoding information that may be set by the video encoding apparatus 100 and the video decoding apparatus 200.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| Intra Inter | Symmetrical Partition Type | Asymmetrical Partition Type | Split Information 0 of Transformation Unit | Split Information 1 of Transformation Unit | Repeatedly Encode Coding Units Having Lower Depth of d+1 |
| Skip (Only 2Nx2N) | 2NxnU 2NxnD nLx2N nRx2N | 2NxnU 2NxnD nLx2N nRx2N | 2Nx2N | NxN (Symmetrical Partition Type) N/2xN/2 (Asymmetrical Partition Type) | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, a prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:n and n:1 (where n is an integer greater than 1), and the asymmetrical partition types having the sizes of nLx2N and nRx2N may be respectively obtained by splitting the width of the prediction unit in 1:n and n:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred to for predicting the current coding unit.

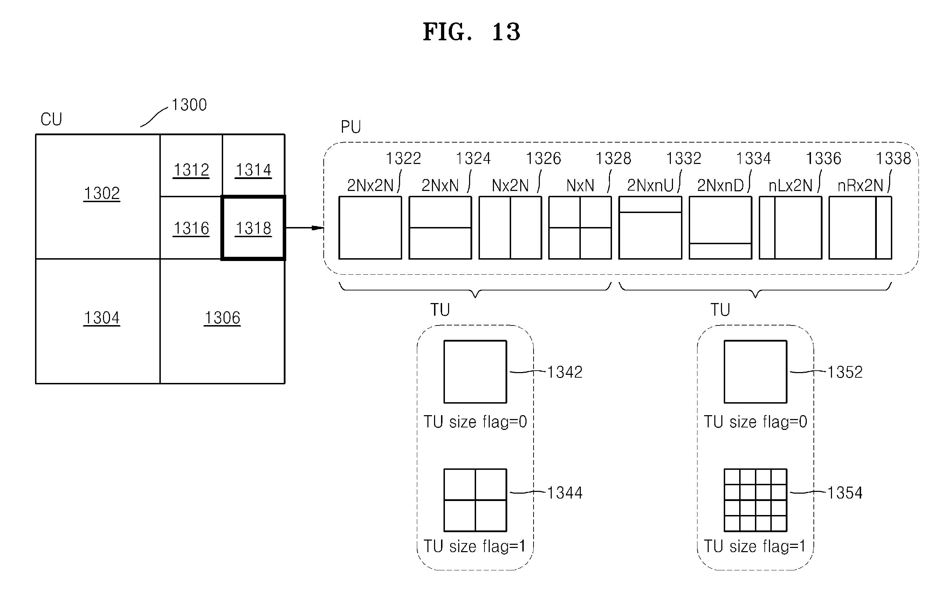

FIG. 13 is a diagram for describing a relationship between a coding unit, a prediction unit, and a transformation unit according to the encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

When the partition type is set to be symmetrical, i.e. the partition type 1322, 1324, 1326, or 1328, a transformation unit 1342 having a size of 2Nx2N is set if split information (TU size flag) of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Hereinafter, motion prediction and compensation performed in the motion prediction unit 420 and the motion compensation unit 425 of the image encoding apparatus 100 of FIG. 4 and the motion compensation unit 550 of the image decoding apparatus 200 of FIG. 5 and encoding and decoding of motion prediction information performed in the entropy encoder 450 of FIG. 4 and the entropy decoder 520 of FIG. 5 will be described in detail. In the description below, the above-described prediction unit may be referred to as a block.

The motion prediction unit 420 generates a prediction value by performing unidirectional prediction on a prediction unit included in a P slice. Also, the motion prediction unit 420 generates a prediction value by performing unidirectional prediction or bidirectional prediction on a prediction unit included in a B slice, by using a reference picture included in two lists, a List 0 and a List 1. While a reference picture is limited to a sheet of a reference picture that comes just before a current picture and a sheet of a reference picture that comes just after the current picture in bidirectional prediction performed in MPEG-2 according to the conventional art, in the bidirectional prediction mode performed by the motion prediction unit 420 according to the current embodiment of the present invention, any two sheets of reference pictures may be used, without being limited to previous and subsequent reference pictures of a current picture, and this mode may be referred to as a bi-predictive mode.

In a motion prediction mode of a current prediction unit, a cost of a result of encoding a prediction value obtained by performing unidirectional prediction with respect to the current prediction unit by referring to reference pictures included in a combination reference list and a cost of a result of encoding a prediction value obtained by performing bidirectional motion prediction on the current prediction unit by using a first reference picture (L0 picture) included in a first reference picture list List 0 and a second reference picture (L1 picture) included in a second reference picture list List 1 may be compared, and a prediction mode having a smaller cost may be determined as a final prediction mode of the current prediction unit. When comparing the costs, a prediction mode having a higher efficiency may be determined based on rate-distortion.

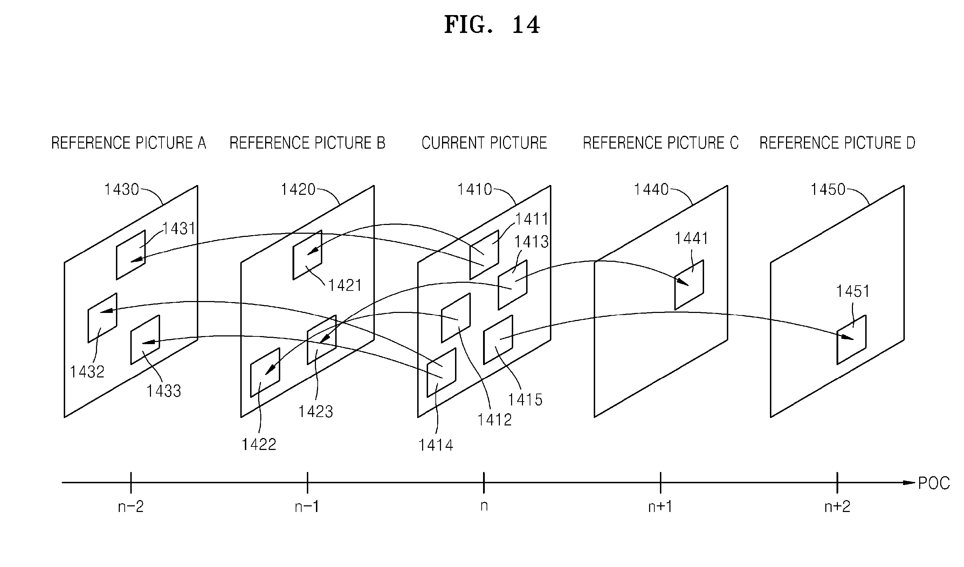

FIG. 14 is a diagram illustrating an example of a reference picture referred to by a prediction unit in a B picture, according to an embodiment of the present invention.

Referring to FIG. 14, a reference picture A 1430 and a reference picture B 1420 are forward pictures having precedent picture order counts (POCs) to that of a current picture 1410, and a reference picture C 1440 and a reference picture D 1450 are backward pictures having POCs that follow that of the current picture 1410.

When the current picture 1410 is a B picture, prediction units in the current picture 1410 are encoded based on one prediction mode among an intra prediction mode, a unidirectional prediction mode, a bidirectional prediction mode, and a direct prediction mode. In an intra prediction mode, a current prediction unit is predicted by using values of nearby pixels. In a unidirectional prediction mode, a current prediction unit is predicted by using a reference picture in a combination reference picture list which is a combination of a first reference picture list List 0 and a second reference picture list List 1. In a bidirectional prediction mode, a current prediction unit is predicted by using a total of two reference pictures, that is, a first reference picture of a first reference picture list (List 0) and a second reference picture of a second reference picture list (List 1). In a direct prediction mode, a prediction motion vector generated by using a motion vector of a nearby prediction unit of a current prediction unit is used as a motion vector of a current prediction unit, and in this mode, only prediction mode information and residual information are used as encoding information for encoding.

A prediction unit in a B picture that is unidirectoinally or bidirectionally predicted may be classified as: i) a prediction unit predicted by referring to two different reference pictures in the same direction; ii) a prediction unit predicted by referring to two different reference pictures in different directions; iii) a prediction unit predicted by referring to a single reference picture twice; and iv) a prediction unit predicted by referring to any single reference picture once. The prediction unit of i) through iii) correspond to a prediction unit predicted bidirectionally by referring to two reference pictures, and the prediction unit of iv) corresponds to a prediction unit that is predicted unidirectionally by using a single reference picture.

As an example of i), a prediction unit 1411 is predicted by using an average of a corresponding block 1431 of the reference picture A 1430 preceding the current picture 1410 and a corresponding block 1421 of the reference picture B 1420 also preceding the current picture 1410. As an example of ii), a prediction unit 1413 is predicted by using an average of a corresponding block 1423 of the reference picture B 1420 and a corresponding block 1441 of a reference picture C 1440. As an example of iii), a prediction unit 1414 is predicted by using an average of corresponding blocks 1432 and 1433 of the reference picture A 1430. As an example of iv), a prediction unit 1415 is predicted by using a corresponding block 1451 of a reference picture D 1450.

As described above, the motion prediction unit 420 generates a prediction value of a prediction unit by performing inter-prediction by using a plurality of reference pictures for each prediction unit. In order for a decoder's end to be able to generate a prediction value of a prediction unit, reference picture information and prediction direction information that indicate which picture is referred to by each prediction unit, that is, prediction mode information, has to be transmitted.

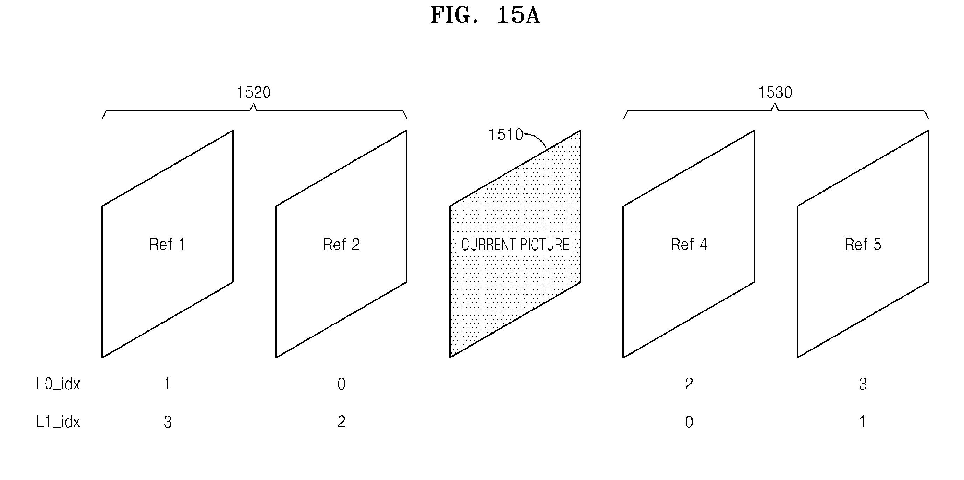

FIGS. 15A through 15C illustrates an example of a reference picture index allocated to a reference picture, according to an embodiment of the present invention.

The motion prediction unit 420 uses, as a reference picture of a prediction unit that is bidirectionally predicted, two reference pictures, that is, a first reference picture of a first reference picture list (List 0) and a second reference picture of a second reference picture list (List 1). To allocate a reference picture index indicating each reference picture in the first reference picture list (List 0), as illustrated in FIG. 15A, a smaller reference picture index of forward pictures 1520 is allocated the closer they are to a current picture 1510, and then, a smaller reference picture index of backward pictures 1530 is allocated the closer they are to the current picture 1510. To allocate a reference picture index (L1_idx) indicating each reference picture in the second reference picture list (List 1), as illustrated in FIG. 15A, a smaller reference picture index of the backward pictures 1530 is allocated the closer they are to the current picture 1510, and then, a smaller reference picture index of the forward pictures 1520 is allocated the closer they are to the current picture 1510.

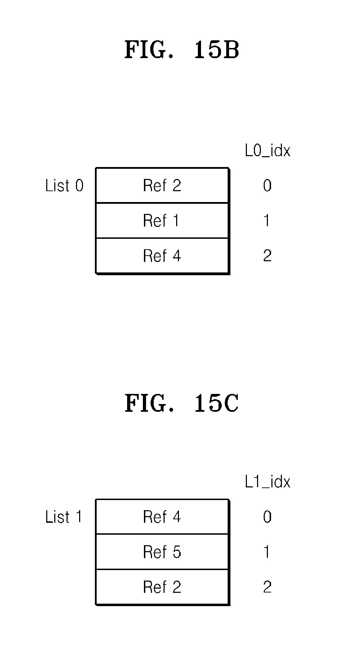

Referring to FIG. 15B, in the first reference picture list (List 0), a reference picture index is allocated in an order from a most recent past picture to a previous picture thereto, and in an order from a closest future picture to a next closest picture thereto. Referring to FIG. 15C, in the second reference picture list (List 1)0, in contrast to the first reference picture list (List 0), a reference picture index is allocated in an order from a closest future picture to a next closest picture thereto, and then, in an order from a most recent past picture to a previous picture thereto.

As will be described later, instead of encoding a first reference picture index (L0_idx) indicating a first reference picture in the first reference picture list (List 0) and a second reference picture index(L1_idx) indicating a second reference picture in the second reference picture list (List 1) without any change, the entropy encoder 450 encodes a single reference syntax (Ref Syntax) indicating a motion prediction mode and a reference picture that are used in encoding of a current prediction unit based on a number of cases of a unidirectional motion prediction mode and a number of cases of a bidirectional motion prediction mode.

Reference picture information of a prediction unit that is unidirectionally predicted by the motion prediction unit 420 also has to be transmitted to a decoder's end. Reference picture information indicating a reference picture used in unidirectional prediction may be transmitted by using a reference syntax allocated to reference pictures in a combination reference picture list which is a combination of the first reference picture list and a second reference picture list.

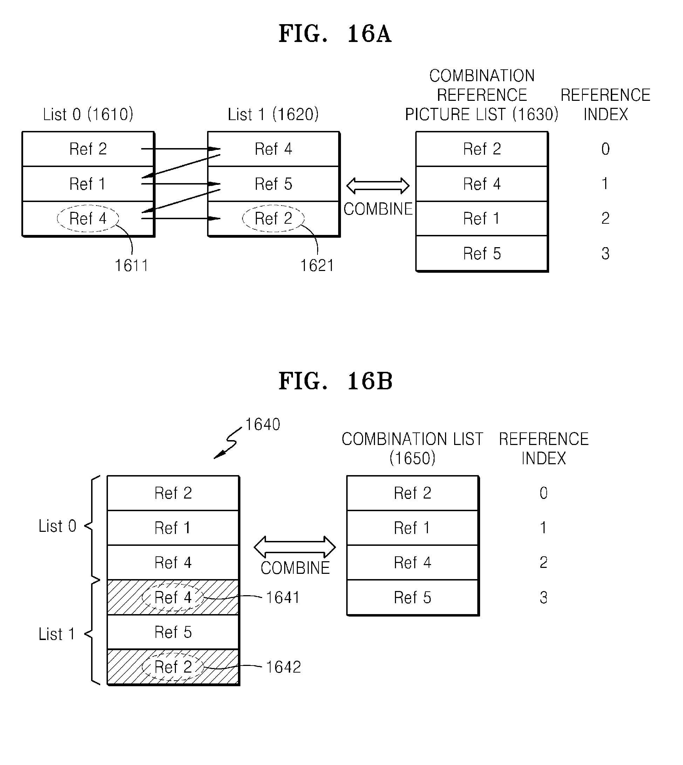

FIGS. 16A and 16B illustrate a combination reference picture list used in unidirectional prediction, according to an embodiment of the present invention.

The entropy encoder 450 may generate a combination reference picture list which is a combination of a first reference picture list List 0 and a second reference picture list List 1 used in bidirectional prediction, allocate a reference syntax (Ref Syntax) to each of reference pictures included in the combination reference picture list, and then encode unidirectional prediction mode information and reference picture information used in the unidirectional prediction mode, by using the allocated reference syntax (Ref Syntax).

For example, referring to FIG. 16A, the entropy encoder 450 may sequentially scan reference pictures of the first reference picture list List 0 1610 and the second reference picture list List 1 1620 in an arrow direction, and may include newly scanned reference pictures in the combination reference picture list, and exclude previously scanned reference pictures from the combination reference picture list, thereby generating the combination reference picture list 1630. In the combination reference picture list, a reference picture Ref 4 1611 of the first reference picture list List 0 1610, which is previously scanned, and a reference picture Ref 2 1621 of the second reference picture list List 1 1620, which is previously scanned, are repeated with respect to previously scanned reference pictures, and thus are not newly added to the combination reference picture list 1630. When a current prediction unit is unidirectionally motion predicted by using a reference picture on the combination reference picture list, the entropy encoder 450 encodes reference syntax information allocated to the reference picture used in unidirectional prediction, as motion prediction information of a current prediction unit. For example, when the current prediction unit is unidirectionally predicted by using the reference picture Ref 4, the entropy encoder 450 encodes a reference syntax (Ref Syntax) having a value of 1 with respect to a prediction mode and reference picture information of the current prediction unit. When the reference syntax (Ref Syntax) having a value of 1 is received at a decoder's end, it may be determined that the current prediction unit is unidirectionally predicted by referring to the reference picture Ref 4.

Besides the method as illustrated in FIG. 16A described above, the combination reference picture list may also be generated using various methods in which only different reference pictures are included, except repeated reference pictures of the first reference picture list and the second reference picture list. For example, referring to FIG. 16B, the entropy encoder 450 may generate a combination reference picture list 1650 by removing repeated reference pictures 1641 and 1642 in a reference picture list 1640 that is generated by sequentially scanning reference pictures of a first reference picture list List 0 and a second reference picture list List 1. A method of generating a combination reference picture list may be preferably set to be the same at encoder's and decoder's ends. If a plurality of combination reference picture lists are generated by using various methods, a predetermined index may be allocated to each method of generating a combination reference picture list, and an index of a method of generating, that is used in generating a combination reference list at the encoder's end may be additionally transmitted to the decoder's end. If methods of generating a combination reference picture list are preset at the encoder's and decoder's ends, an index about a method of generating a combination reference picture list as described above does not have to be transmitted.

The entropy encoder 450 encodes information about the unidirectional prediction mode, the bidirectional prediction mode, and reference pictures according to each prediction mode, by using a single reference syntax (Ref Syntax).

As described above, when a current prediction unit is unidirectionally predicted by using a reference picture on the combination reference picture list, the entropy encoder 450 encodes reference syntax information allocated to the reference picture used in unidirectional prediction as motion prediction information of the current prediction unit. That is, in the embodiment of FIG. 16A described above, when a reference syntax (Ref Syntax) has a value of 0, it indicates that the current prediction unit is unidirectionally predicted by referring to a reference picture Ref 2; when the reference syntax (Ref Syntax) has a value of 1, it indicates that the current prediction unit is unidirectionally predicted by referring to a reference picture Ref 4; when the reference syntax has a value of 2, it indicates that the current prediction unit is unidirectionally predicted by referring to a reference picture Ref 1; and when the reference syntax (Ref Syntax) has a value of 3, it indicates that the current prediction unit is unidirectionally predicted by referring to a reference picture Ref 5.

In order to encode a bidirectional prediction mode and information about two reference pictures (L0 picture and L1 picture) used in the bidirectional prediction mode in a manner different from the unidirectional prediction mode, the entropy encoder 450 allocates a reference syntax to each combination of reference pictures available in a bidirectional prediction mode based on a number of cases of a unidirectional motion prediction mode and a number of cases of the bidirectional motion prediction mode, and encodes the reference syntax value allocated to a combination of reference pictures used in bidirectional prediction of a current prediction unit as motion prediction information.

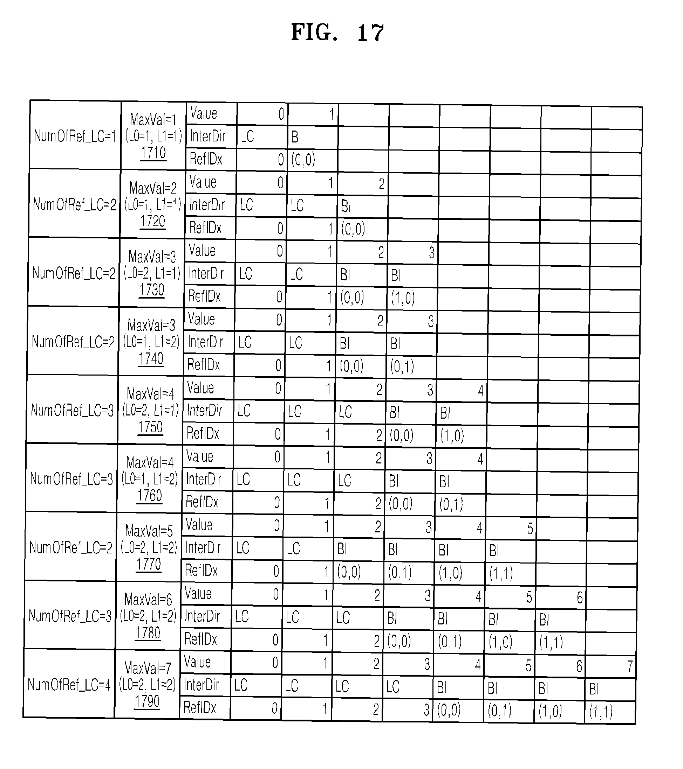

FIG. 17 illustrates a table showing reference syntax values (Value) indicating unidirectional and bidirectional motion prediction modes and reference pictures, allocated based on a number of cases of unidirectional motion prediction modes and a number of cases of bidirectional motion prediction modes, according to an embodiment of the present invention.

Referring to FIG. 17, MaxVal refers to a sum (Max Value) of the number of cases of the unidirectional motion prediction mode and the number of cases of the bidirectional motion prediction mode. MaxVal refers to a maximum value of a reference syntax value (Value), and MaxVal=MaxValue-1.

As described above, in a unidirectional motion prediction mode, the number of cases is classified according to which reference picture of the combination reference picture list is referred to, and consequently, the number of cases of a unidirectional motion prediction mode is determined by a number of reference pictures (NumOfRec_LC) in a combination reference picture list.

When a number of reference pictures included in a first reference picture list is NumOfRef_L0, a number of reference pictures included in a second reference picture list is NumOfRef_L1, and a number of reference pictures that are repeatedly included in the first and second reference picture lists is NumOfRedundancy, the number (NumOfRec_LC) of reference pictures included in the combination reference picture list may be NumOfRef_L0+NumOfRef_L1-NumOfRedundancy, indicating the number of unrepeated reference pictures.

Instead of setting a reference syntax for every possible case of a unidirectional motion prediction mode, a reference syntax as illustrated in FIG. 17 may be allocated up to a number of MaxCombinedRefNum, and if the number of possible cases exceeds MaxCombinedRefNum, an additional process may be performed. For example, when MaxCombinedRefNum is 4, the entropy encoder 450 may allocate a reference syntax to first through fourth reference pictures included in the combination reference picture list only, and when a reference picture of a unidirectionally predicted current prediction unit is included in a reference picture on a combination reference picture list, the entropy encoder 450 determines a single reference syntax indicating a unidirectional prediction mode of a current prediction unit and a reference picture that is used therein and encodes the reference syntax. If a reference picture referred to by a current prediction unit is not predefined in a reference syntax allocation table, a reference syntax value may be encoded to MaxValue. In other words, if a reference syntax has a value MaxValue, this is an exceptional case from those according to prediction modes and reference pictures of FIG. 17, and here, an additional, exceptional process is performed. A prediction mode and reference picture information may be additionally encoded with respect to a current prediction unit of the exceptional process.

When a maximum number of reference pictures on a combination reference picture list that is preset by the reference syntax allocation table is limited to be less than or equal to MaxCombinedRefNum, the number of reference pictures (NumOfRec_LC) included in the combination reference picture list is min(MaxCombinedRefNum, NumOfRef_L0+NumOfRef_L1-NumOfRedundancy). If the number of reference pictures included in a first reference picture list and a second reference picture list that are preset by the reference syntax allocation table is limited to a predetermined number n (where n is an integer), NumOfRef_L0 is controlled to be min(n, NumOfRef_L0), and NumOfRef_L1 is controlled to be min(n, NumOfRef_L1).

A number of cases of a bidirectional motion prediction mode is classified according to which reference picture of a first reference picture list List 0 is used as a first reference picture and which reference picture of a second reference picture list List 1 is used as a second reference picture. Consequently, a number of cases of a bidirectional motion prediction mode has a value of NumOfRef_L0*NumOfRef_L1. For example, when two reference pictures are included in the first reference picture list List 0, and two reference pictures are included in the second reference picture list List 1, a number of cases of a bidirectional motion prediction mode is 2*2, that is, a total of four cases.

Therefore, a sum (Max Value) of a number of cases of a unidirectional motion prediction mode and a number of cases of a bidirectional motion prediction mode has a value according to the following equation: Max Value=NumOfRef-LC + NumOfRef_L0*NumOfRef_L1.

Accordingly, the entropy encoder 450 allocates a value from 0 to (Max Value-1) to reference pictures used in a unidirectional motion prediction mode and a combination of reference pictures used in a bidirectional motion prediction mode, and encodes the allocated value as a value of a reference syntax (Value), thereby encoding information about a motion prediction mode and reference picture information used in the motion prediction, by using a single syntax.

Hereinafter, an operation of adaptively determining a reference syntax according to a number of reference pictures included in the first reference picture list (List 0) and the second reference picture list (List 1) and a number of cases included in a combination reference picture list will be described in detail with reference to FIG. 17. The maximum number of reference pictures to be included in each of the first reference picture list (List 0) and the second reference picture list (List 1) will be assumed to be two. Also, a motion prediction mode (InterDir) in FIG. 17 denotes a motion prediction direction, and LC denotes a unidirectional motion prediction mode that uses a combination reference picture list, and BI denotes a bidirectional motion prediction mode in which a first reference picture (L0 picture) of the first reference picture list (List 0) and a second reference picture (L1 picture) of the second reference picture list (List 1) are used. In addition, a reference picture index (RefIdx) in FIG. 17 indicates a reference picture used in a unidirectional motion prediction mode or in a bidirectional motion prediction mode, and RefIdx in the unidirectional motion prediction mode (LC) is a value indicating a reference picture on a combination reference picture list like the reference syntax (Ref Syntax) described above with reference to FIG. 16A. Regarding (x,y) (x and y are 0 or 1), which is RefIdx in the bidirectional motion prediction mode BI, an x value indicates a reference picture index of the first reference picture (L0 picture) of the first reference picture list (List 0), and a y value indicates a reference picture index of the second reference picture (L1 picture) of the second reference picture list (List 1). For example, if (RefIdx) = (0, 0), this indicates a bidirectional motion prediction mode where a first reference picture (L0 picture) having a value of RefIdx=0 of the first reference picture list (List 0) and a second reference picture (L1 picture) having a value of RefIdx=0 of the second reference picture list (List 1) are used.

a) If MaxVal=1 (reference numeral 1710)

If the first reference picture list (List 0) and the second reference picture list (List 1) each include only one sheet of a reference picture (L0=1, L1=1), and the L0 picture and the L1 picture are identical, since the L0 picture and the L1 picture are identical, only one sheet of the reference picture is included in a combination reference picture list. Thus, only one case of unidirectional motion prediction that is performed by using only one sheet of the reference picture exists, and only one case of bidirectional motion prediction that is performed using the one sheet of the reference picture (L0, L1) twice, exists.

Accordingly, the entropy encoder 1410 allocates 0 as a value of a reference syntax (Ref Syntax) when unidirectional motion prediction is performed; and the entropy encoder 1410 allocates 1 as a value of a reference syntax (Ref Syntax) when bidirectional motion prediction is performed, and 0 or 1 is encoded as motion information of a current prediction unit according to a prediction mode applied to the current prediction unit.

At a decoders' end, if the first reference picture list (List 0) and the second reference picture list (List 1) each include only one sheet of reference picture (L0=1, L1=1), and the L0 picture and the L1 picture are identical, and 0 is received as a reference syntax (Ref Syntax), unidirectional motion prediction is performed using the L0 picture (or L1 picture), and when 1 is received, bidirectional motion prediction is performed by referring to the L0 picture (or L1 picture) twice.

b) If MaxVal=2 (reference numeral 1720)

If the first reference picture list (List 0) and the second reference picture list (List 1) each include only one sheet of a reference picture, and the L0 picture and the L1 picture are not identical (L0=1, L1=1), and the L0 picture and the L1 picture are not identical, as a total of two sheets of reference pictures are included in a combination reference picture list, two cases of unidirectional motion prediction where the two sheets of reference pictures are used, exist. In addition, only one case of bidirectional motion prediction that is performed by referring to each reference picture (L0 and L1 pictures) of the first reference picture list (List 0) and the second reference picture list (List 1) exists.

Accordingly, the entropy encoder 1410 allocates 0 or 1 as a value of a reference syntax (Ref Syntax) according to which reference picture is used during unidirectional motion prediction of a prediction unit of a current picture, and when bidirectional motion prediction is performed, 2 is allocated as a value of a reference syntax (Ref Syntax), and one of 0 through 2 is encoded, as motion information, according to a prediction mode and a reference picture applied to the current prediction unit.

At a decoders' end, if the first reference picture list (List 0) and the second reference picture list (List 1) each include only one sheet of a reference picture (L0=1, L1=1), and the L0 picture and the L1 picture are not identical, and 0 is received as a reference syntax (Ref Syntax), unidirectional motion prediction is performed using a  first reference picture of the two reference pictures included in the combination reference picture list, and when 1 is received as a reference syntax (Ref Syntax), unidirectional motion prediction is performed using a second reference picture of the two reference pictures included in the combination reference picture list. Also, at the decoder's end, when 2 is received as a reference syntax (Ref Syntax), bidirectional motion prediction is performed by referring to the L0 picture and the L1 picture.

c) If MaxVal=3 (reference numeral 1730)

If the first reference picture list (List 0) includes two reference pictures, and the second reference picture list (List 1) includes only one sheet of a reference picture (L0=2, L1=1), and one of a L0 picture and a L1 picture is repeated, a total of two sheets of reference pictures are included in a combination reference picture list. Accordingly, two cases of unidirectional motion prediction where two sheets of reference pictures are used exist. In addition, two cases ((0,0), (1,0)) of bidirectional motion prediction that is performed by referring to each reference picture (L0 and L1 pictures) of the first reference picture list (List 0) and the second reference picture list (List 1) exist.

Accordingly, the entropy encoder 1410 allocates 0 or 1 as a value of a reference syntax (Ref Syntax) according to which reference picture is used during unidirectional motion prediction of a prediction unit of a current picture, and when bidirectional motion prediction is performed, 2 or 3 is allocated as a value of a reference syntax (Ref Syntax), and one of 0 through 3 is encoded, as motion information, according to a prediction mode and a reference picture applied to a current prediction unit.

At a decoders' end, if the first reference picture list (List 0) includes two sheets of reference pictures, and the second reference picture list (List 1) includes only one sheet of reference picture (L0=2, L1=1), and one of a L0 picture and a L1 picture is repeated, and 0 is received as a reference syntax (Ref Syntax), unidirectional motion prediction is performed using a first reference picture of the two reference pictures included in the combination reference picture list, and when 1 is received as a reference syntax (Ref Syntax), unidirectional motion prediction is performed using a second reference picture of the two reference pictures included in the combination reference picture list. Also, at the decoder's end, when 2 is received as a reference  syntax (Ref Syntax), a reference picture of a first reference index in the first reference picture list (List 0) is determined as a L0 picture, and a reference picture in the second reference picture list (List 1) is determined as a L1 picture, and then bidirectional motion prediction is performed. At the decoder's end, when 3 is received as a reference syntax (Ref Syntax), a reference picture of a second reference index is determined as a L0 picture in the first reference picture list (List 0), and a reference picture in the second reference picture list (List 1) is determined as a L1 picture, and then bidirectional motion prediction is performed.

d) If MaxVal =3 (reference numeral 1740)

If the first reference picture list (List 0) includes only one sheet of a reference picture, and the second reference picture list (List 1) includes two sheets of reference pictures (L0=1, L1=2), and one of a L0 picture and a L1 picture is repeated, a total of two sheets of reference pictures are included in a combination reference picture list. Accordingly, two cases of unidirectional motion prediction where two sheets of reference pictures are used exist. In addition, two cases ((0,0), (1,0)) of bidirectional motion prediction that is performed by referring to each reference picture (L0 and L1 pictures) of the first reference picture list (List 0) and the second reference picture list (List 1) exist.

Accordingly, the entropy encoder 1410 allocates 0 or 1 as a value of a reference syntax (Ref Syntax) according to which reference picture is used during unidirectional motion prediction of a prediction unit of a current picture, and when bidirectional motion prediction is performed, 2 or 3 is allocated as a value of a reference syntax (Ref Syntax), and one of 0 through 3 is encoded, as motion information, according to a prediction mode and a reference picture applied to the current prediction unit.

At a decoders' end, if the first reference picture list (List 0) includes one sheet of a reference picture, and the second reference picture list (List 1) includes two sheets of reference pictures (L0=1, L1 =2), and one of a L0 picture and a L1 picture is repeated, and 0 is received as a reference syntax (Ref Syntax), unidirectional motion prediction is performed using a first reference picture of the two reference pictures included in the combination reference picture list, and when 1 is received as a reference syntax (Ref Syntax), unidirectional motion prediction is performed using a second reference picture of the two reference pictures included in the combination reference picture list. Also, at the decoder's end, when 2 is received as a reference syntax (Ref Syntax), one sheet of a reference picture in the first reference picture list (List 0) is determined as a L0 picture, and a first reference picture in the second reference picture list (List 1) is determined as a L1 picture, and then bidirectional motion prediction is performed. At the decoder's end, when 3 is received as a reference syntax (Ref Syntax), one sheet of reference picture in the first reference picture list (List 0) is determined as a L0 picture, and a second reference picture in the second reference picture list (List 1) is determined as a L1 picture, and then bidirectional motion prediction is performed.

e) If MaxVal=5 (reference numeral 1750)

If the first reference picture list (List 0) includes two reference pictures, and the second reference picture list (List 1) includes only one sheet of a reference picture (L0=2, L1=1), and there is no repeating picture among a L0 picture and a L1 picture, a total of three sheets of reference pictures are included in a combination reference picture list. Accordingly, three cases of unidirectional motion prediction where three sheets of reference pictures are used exist. In addition, two cases, ((0,0), (1,0)), of bidirectional motion prediction that is performed by referring to each reference picture (L0 and L1 pictures) of the first reference picture list (List 0) and the second reference picture list (List 1) exist.

Accordingly, the entropy encoder 1410 allocates one of 0 through 2 as a value of a reference syntax (Ref Syntax) according to which reference picture is used during unidirectional motion prediction of a prediction unit of a current picture, and when bidirectional motion prediction is performed, 3 or 4 is allocated as a value of a reference syntax (Ref Syntax), and one of 0 through 4 is encoded, as motion information, according to a prediction mode and a reference picture applied to a current prediction unit.

At a decoders' end, if the first reference picture list (List 0) includes two sheets of reference pictures, and the second reference picture list (List 1) includes only one sheet of reference picture (L0=2, L1=1), and there is no repeating picture among a L0 picture and a L1 picture, and 0 is received as a reference syntax (Ref Syntax), unidirectional motion prediction is performed using a first reference picture of the three reference pictures included in the combination reference picture list; when 1 is received as a reference syntax (Ref Syntax), unidirectional motion prediction is performed using a second reference picture of the three reference pictures included in the combination reference picture list; and when 2 is received as a reference syntax (Ref Syntax), unidirectional motion prediction is performed using a third reference picture of the three reference pictures included in the combination reference picture list.

Also, at the decoder's end, when 3 is received as a reference syntax (Ref Syntax), a reference picture of a first reference index in the first reference picture list (List 0) is determined as a L0 picture, and one sheet of a reference picture in the second reference picture list (List 1) is determined as a L1 picture, and then bidirectional motion prediction is performed. At the decoder's end, when 4 is received as a reference syntax (Ref Syntax), a reference picture of a second reference index in the first reference picture list (List 0) is determined as a L0 picture, and one sheet of reference picture in the second reference picture list (List 1) is determined as a L1 picture, and then bidirectional motion prediction is performed.

f) If MaxVal=4 (reference numeral 1760)

If the first reference picture list (List 0) includes only one sheet of a reference picture, and the second reference picture list (List 1) includes two sheets of reference pictures (L0=1, L1=2), and there is no repeating picture among a L0 picture and a L1 picture, a total of three sheets of reference pictures are included in a combination reference picture list. Accordingly, three cases of unidirectional motion prediction where three sheets of reference pictures are used exist. In addition, two cases ((0,0), (1,0)) of bidirectional motion prediction that is performed by referring to each reference picture (L0 and L1 pictures) of the first reference picture list (List 0) and the second reference picture list (List 1) exist.

Accordingly, the entropy encoder 1410 allocates one of 0 through 2 as a value of a reference syntax (Ref Syntax) according to which reference picture is used during unidirectional motion prediction of a prediction unit of a current picture, and when bidirectional motion prediction is performed, 3 or 4 is allocated as a value of a reference syntax (Ref Syntax), and one of 0 through 4 is encoded, as motion information, according to a prediction mode and a reference picture applied to a current prediction unit.

At a decoders' end, if the first reference picture list (List 0) includes two sheets of reference pictures, and the second reference picture list (List 1) includes only one sheet of reference picture (L0=2, L1=1), and there is no repeating picture among a L0 picture and a L1 picture, and 0 is received as a reference syntax (Ref Syntax), unidirectional motion prediction is performed using a first reference picture of the three reference pictures included in the combination reference picture list; when 1 is received as a reference syntax (Ref Syntax), unidirectional motion prediction is performed using a second reference picture of the three reference pictures included in the combination reference picture list; and when 2 is received as a reference syntax (Ref Syntax), unidirectional motion prediction is performed using a third reference picture of the three reference pictures included in the combination reference picture list.

Also, at the decoder's end, when 3 is received as a reference syntax (Ref Syntax), one sheet of reference picture of in the first reference picture list (List 0) is determined as a L0 picture, and a first reference picture in the second reference picture list (List 1) is determined as a L1 picture, and then bidirectional motion prediction is performed. At the decoder's end, when 4 is received as a reference syntax (Ref Syntax), one sheet of a reference picture in the first reference picture list (List 0) is determined as a L0 picture, and a second reference picture in the second reference picture list (List 1) is determined as a L1 picture, and then bidirectional motion prediction is performed.

g) If MaxVal=5 (reference numeral 1770)

If the first reference picture list (List 0) and the second reference picture list (List 1) each include two sheets of reference pictures (L0=2, L1=2), and two reference pictures of a L0 picture and a L1 picture are repeated, a total of two sheets of reference pictures are included in a combination reference picture list. Thus, two cases of unidirectional motion prediction that is performed using two sheets of reference pictures exist. In addition, four cases ((0,0), (0,1), (1,0), (1,1)) of bidirectional motion prediction that is performed using each reference picture (L0 and L0 pictures) of the first reference picture list (List 0) and the second reference picture list (List 1) exist.

Accordingly, the entropy encoder 1410 allocates 0 or 1 as a value of a reference syntax (Ref Syntax) according to which reference picture is used during unidirectional motion prediction of a prediction unit of a current picture, and when bidirectional motion prediction is performed, one of 2 through 5 is allocated as a value of a reference syntax (Ref Syntax), and one of 0 through 5 is encoded, as motion information, according to a prediction mode and a reference picture applied to a current prediction unit.

At a decoders' end, if the first reference picture list (List 0) and the second reference picture list (List 1) each includes two sheets of reference pictures (L0=2, L1=2), and two sheets of reference pictures are repeated among a L0 picture and a L1 picture, and 0 is received as a reference syntax (Ref Syntax), unidirectional motion prediction is performed using a first reference picture of the two reference pictures included in the combination reference picture list, and when 1 is received as a reference syntax (Ref Syntax), unidirectional motion prediction is performed using a second reference picture of the two reference pictures included in the combination reference picture list.

Also, at the decoder's end, when 2 is received as a reference syntax (Ref Syntax), a first reference picture in the first reference picture list (List 0) is determined as a L0 picture, and a first reference picture in the second reference picture list (List 1) is determined as a L1 picture, and then bidirectional motion prediction is performed. At the decoder's end, when 3 is received as a reference syntax (Ref Syntax), a first reference picture in the first reference picture list (List 0) is determined as a L0 picture, and a second reference picture in the second reference picture list (List 1) is determined as a L1 picture, and then bidirectional motion prediction is performed. At the decoder's end, when 4 is received as a reference syntax (Ref Syntax), a second reference picture in the first reference picture list (List 0) is determined as a L0 picture, and a first reference picture in the second reference picture list (List 1) is determined as a L1 picture, and then bidirectional motion prediction is performed. At the decoder's end, when 5 is received as a reference syntax (Ref Syntax), a second reference picture in the first reference picture list (List 0) is determined as a L0 picture, and a second reference picture in the second reference picture list (List 1) is determined as a L1 picture, and then bidirectional motion prediction is performed.

h) If MaxVal=6 (reference numeral 1780)

If the first reference picture list (List 0) and the second reference picture list (List 1) each include two sheets of reference pictures (L0=2, L1=2), and one reference picture among a L0 picture and a L1 picture is repeated, a total of three sheets of reference pictures are included in a combination reference picture list. Thus, three cases of unidirectional motion prediction which is performed by using three sheets of reference pictures exist. In addition, four cases ((0,0), (0,1), (1,0), (1,1)) of bidirectional motion prediction that is performed using each reference picture (L0 and L0 pictures) of the first reference picture list (List 0) and the second reference picture list (List 1) exist.

Accordingly, the entropy encoder 1410 allocates one of 0 through 2 as a value of a reference syntax (Ref Syntax) according to which reference picture is used during unidirectional motion prediction of a prediction unit of a current picture, and when bidirectional motion prediction is performed, one of 3 through 6 is allocated as a value of a reference syntax (Ref Syntax), and one of 0 through 6 is encoded, as motion information, according to a prediction mode and a reference picture applied to a current prediction unit.

At a decoder's end, if the first reference picture list (List 0) and the second reference picture list (List 1) each include two sheets of reference pictures (L0=2, L1 =2), and one sheet of a L0 picture and a L1 picture is repeated, when 0 is received as a reference syntax (Ref Syntax), unidirectional motion prediction is performed using a first reference picture of the three reference pictures included in the combination reference picture list; when 1 is received as a reference syntax (Ref Syntax), unidirectional motion prediction is performed using a second reference picture of the three reference pictures included in the combination reference picture list; and when 2 is received as a reference syntax (Ref Syntax), unidirectional motion prediction is performed using a third reference picture of the three reference pictures included in the combination reference picture list.

At the decoder's end, when 3 is received as a reference syntax (Ref Syntax), a first reference picture in the first reference picture list (List 0) is determined as a L0 picture, and a first reference picture in the second reference picture list (List 1) is determined as a L1 picture, and then bidirectional motion prediction is performed. At the decoder's end, when 4 is received as a reference syntax (Ref Syntax), a first reference picture in the first reference picture list (List 0) is determined as a L0 picture, and a second reference picture in the second reference picture list (List 1) is determined as a L1 picture, and then bidirectional motion prediction is performed. At the decoder's end, when 5 is received as a reference syntax (Ref Syntax), a second reference picture in the first reference picture list (List 0) is determined as a L0 picture, and a first reference picture in the second reference picture list (List 1) is determined as a L1 picture, and then bidirectional motion prediction is performed. At the decoder's end, when 6 is received as a reference syntax (Ref Syntax), a second reference picture in the first reference picture list (List 0) is determined as a L0 picture, and a second reference picture in the second reference picture list (List 1) is determined as a L1 picture, and then bidirectional motion prediction is performed.

i) If MaxVal=7 (reference numeral 1790)

If the first reference picture list (List 0) and the second reference picture list (List 1) each include two sheets of reference pictures (L0=2, L1=2), and there is no repeating picture in the L0 picture and the L1 picture, a total of four sheets of reference pictures are included in a combination reference picture list. Thus, four cases of unidirectional motion prediction which is performed by using four sheets of reference pictures exist. In addition, four cases ((0,0), (0,1), (1,0), (1,1)) of bidirectional motion prediction that is performed using each reference picture (L0 and L0 pictures) of the first reference picture list (List 0) and the second reference picture list (List 1) exist.

Accordingly, the entropy encoder 1410 allocates one of 0 through 3 as a value of a reference syntax (Ref Syntax) according to which reference picture is used during unidirectional motion prediction of a prediction unit of a current picture, and when bidirectional motion prediction is performed, one of 4 through 7 is allocated as a value of a reference syntax (Ref Syntax), and one of 0 through 7 is encoded, as motion information, according to a prediction mode and a reference picture applied to a current prediction unit.

At a decoders' end, if the first reference picture list (List 0) and the second reference picture list (List 1) each include two sheets of reference pictures (L0=2, L1=2), and there is no repeating picture in a L0 picture and a L1 picture, and 0 is received as a reference syntax (Ref Syntax), unidirectional motion prediction is performed using a first reference picture of the four reference pictures included in the combination reference picture list; when 1 is received as a reference syntax (Ref Syntax), unidirectional motion prediction is performed using a second reference picture of the four reference pictures included in the combination reference picture list; when 2 is received as a reference syntax (Ref Syntax), unidirectional motion prediction is performed using a third reference picture of the four reference pictures included in the combination reference picture list; and when 3 is received as a reference syntax (Ref Syntax), unidirectional motion prediction is performed using a fourth reference picture of the four reference pictures included in the combination reference picture list.

At the decoder's end, when 4 is received as a reference syntax (Ref Syntax), a first reference picture in the first reference picture list (List 0) is determined as a L0 picture, and a first reference picture in the second reference picture list (List 1) is determined as a L1 picture, and then bidirectional motion prediction is performed. At the decoder's end, when 5 is received as a reference syntax (Ref Syntax), a first reference picture in the first reference picture list (List 0) is determined as a L0 picture, and a second reference picture in the second reference picture list (List 1) is determined as a L1 picture, and then bidirectional motion prediction is performed. At the decoder's end, when 6 is received as a reference syntax (Ref Syntax), a second reference picture in the first reference picture list (List 0) is determined as a L0 picture, and a first reference picture in the second reference picture list (List 1) is determined as a L1 picture, and then bidirectional motion prediction is performed. At the decoder's end, when 7 is received as a reference syntax (Ref Syntax), a second reference picture in the first reference picture list (List 0) is determined as a L0 picture, and a second reference picture in the second reference picture list (List 1) is determined as a L1 picture, and then bidirectional motion prediction is performed.

As described above, the entropy encoder 450 allocates one of 0 through (Max Value-1) for each combination of reference pictures available in a unidirectional motion prediction mode and reference pictures available in a bidirectional motion prediction mode, and encodes a value of a reference syntax corresponding to a relevant motion prediction mode and reference pictures that are applied to the current prediction unit, thereby encoding a motion prediction mode of a current prediction unit and reference picture information, by using a single reference syntax.

That is, the entropy encoder 450 may allocate values from 0 to (NumOfRef_LC-1) according to a reference picture index in a combination reference picture list used as prediction mode information and reference picture information of a current prediction unit that is unidirectionally motion predicted, based on a number of reference pictures NumOfRef_LC in the combination reference picture list, thereby encoding motion information of a current prediction unit. Also, the entropy encoder 450 may allocate values from NumOfRef_LC through (MaxValue-1) and encode motion information of a current prediction unit according to which of first and second reference pictures in the first reference picture list (List 0) and the second reference picture list (List 1) are used, as prediction mode information and reference picture information of the current prediction unit that is bidirectionally motion predicted.

Also, if a reference syntax (Ref Syntax) has a value MaxValue, the entropy encoder 450 may set an exceptional case which is not a case where a motion prediction mode and a reference picture are indicated by using a preset reference syntax.

The entropy encoder 450 may binarize a reference syntax (Ref Syntax) by using a truncated unary binarization method to generate a bitstream.

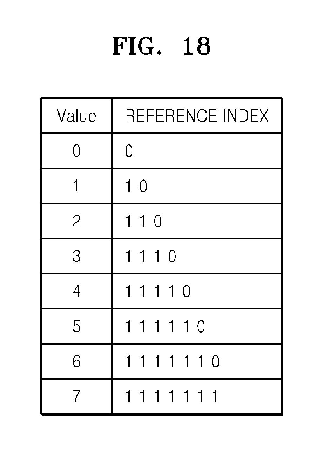

FIG. 18 illustrates an example of a process of binarizing reference syntax information, according to an embodiment of the present invention.

Referring to FIG. 18, the entropy encoder 450 may binarize a value of a reference syntax by using a truncated unary binarization method when encoding a reference syntax (Ref Syntax). That is, the entropy encoder 450 may output 1 corresponding to a reference syntax value (Value) as illustrated in FIG. 17 and a following 0, thereby binarizing the reference syntax. If a reference syntax is not defined in advance by a reference syntax allocation table as illustrated in FIG. 17, the entropy encoder 450 may indicate this exceptional case which is not defined in advance, by outputting a binarization bit string consisting of 1 s of a number (MaxValue-1). For example, if a total number of cases (MaxValue) of unidirectional motion prediction modes and bidirectional motion prediction modes that are preset by using a reference syntax is 7, and a current prediction unit is set by a syntax reference index, the entropy encoder 450 outputs a binarization bit string consisting of consecutive 1 s and a single 0 following the 1 s as illustrated in FIG. 18 according to a value of a reference syntax corresponding to a current prediction unit. The entropy encoder 450 sets a case where a reference syntax (Ref Syntax) has a value of 7 as an exceptional case where not a preset combination of a unidirectional prediction mode but a bidirectional motion prediction mode is used, and outputs "1111111" indicating this exceptionally processed information.

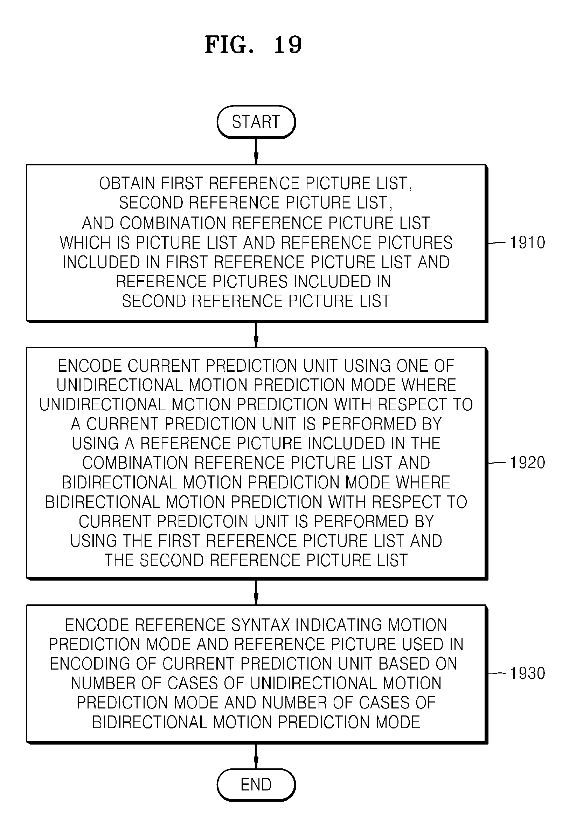

FIG. 19 is a flowchart illustrating an image encoding method according to an embodiment of the present invention.

Referring to FIG. 19, in operation 1910, the entropy encoder 450 obtains a first reference picture list, a second reference picture list, and a combination reference picture list which is a combination of reference pictures included in the first reference picture list and reference pictures included in the second reference picture list. As described above, when a number of reference pictures included in the first reference picture list is NumOfRef_L0, a number of reference pictures included in the first reference picture list is NumOfRef_L1, and a number of reference pictures that are repeatedly included in the first and second reference picture lists is NumOfRedundancy, the combination reference picture list may include unrepeated reference pictures of a number of

NumofRef_L0+NumofRef_L1-NumOfRedundancy.

In operation 1920, the motion prediction unit 420 performs unidirectional motion prediction with respect to a current prediction unit by using a reference picture included in the combination reference picture list and bidirectional motion prediction with respect to the current prediction unit by using the first reference picture list and the second reference picture list, and determines a motion prediction mode having a lower cost, as a prediction mode of the current prediction unit.

In operation 1930, the entropy encoder 450 encodes a reference syntax indicating a motion prediction mode and a reference picture used in encoding of the current prediction unit based on a number of cases of a unidirectional motion prediction mode and a number of cases of a bidirectional motion prediction mode. The entropy encoder 450 may allocate values from 0 to (NumOfRef_LC-1) according to a reference picture index in a combination reference picture list used as prediction motion information and reference picture information of the current prediction unit that is unidirectionally motion predicted, thereby encoding motion information of the current prediction unit. Also, the entropy encoder 450 may allocate values from NumOfRef_LC to (MaxValue-1) according to which of a first reference picture and a second reference picture in the first reference picture list (List 0) and the second reference picture list (List 1) is used as prediction mode information and reference picture information of the current prediction unit that is bidirectionally motion predicted, thereby encoding motion information of the current prediction unit. Also, when a reference syntax (Ref Syntax) has a value MaxValue, the entropy encoder 450 may encode motion information of the current prediction unit by setting an exceptional case which does not correspond to neither a preset unidirectional prediction mode nor a preset bidirectional motion prediction mode.

During decoding, the entropy decoder 520 of FIG. 5 obtains a first reference picture list, a second reference picture list, and a combination reference picture list which is a combination of reference pictures included in the first reference picture list and reference pictures included in the second reference picture list, and determines a value of a reference syntax according to a motion prediction mode and reference pictures used in encoding of a current prediction unit based on a number of cases of a unidirectional motion prediction mode where reference pictures included in the combination reference list are used and a number of cases of a bidirectional motion prediction mode where the first reference picture list and the second reference picture list are used.

In detail, in the same manner as the entropy encoder 450 described above, the entropy decoder 520 calculates a sum MaxValue of the number of cases of the unidirectional motion prediction mode and the number of cases of the bidirectional motion prediction mode according to the following equation: Max Va!ue=NumOfRef_LC + NumOfRef_ L0*NumOfRef_L1, and then if a reference syntax (Ref Syntax) is a value from 0 to (NumOfRef_LC-1), unidirectional motion prediction is indicated by referring to a reference picture from among combination reference picture lists of a number NumOfRef_LC, and when the reference syntax has a value from NumOfRef_LC to (MaxValue-1), a bidirectional motion prediction mode, where two reference pictures according to a combination of a first reference picture of the first reference picture list and a second reference picture of the second reference picture list are used, is determined as a motion prediction mode. As described above, information about which prediction mode among a unidirectional prediction mode and a bidirectional motion prediction mode is applied to prediction of a current prediction unit and information about reference pictures used in the prediction of the current unit may be determined based on the reference syntax itself.

The motion compensation unit 560 may use prediction mode information and reference picture determined based on the reference syntax of the current prediction unit obtained by using the entropy decoder 520 to perform unidirectional motion compensation and bidirectional motion compensation with respect to the current prediction unit, thereby generating a prediction value of the current prediction unit.

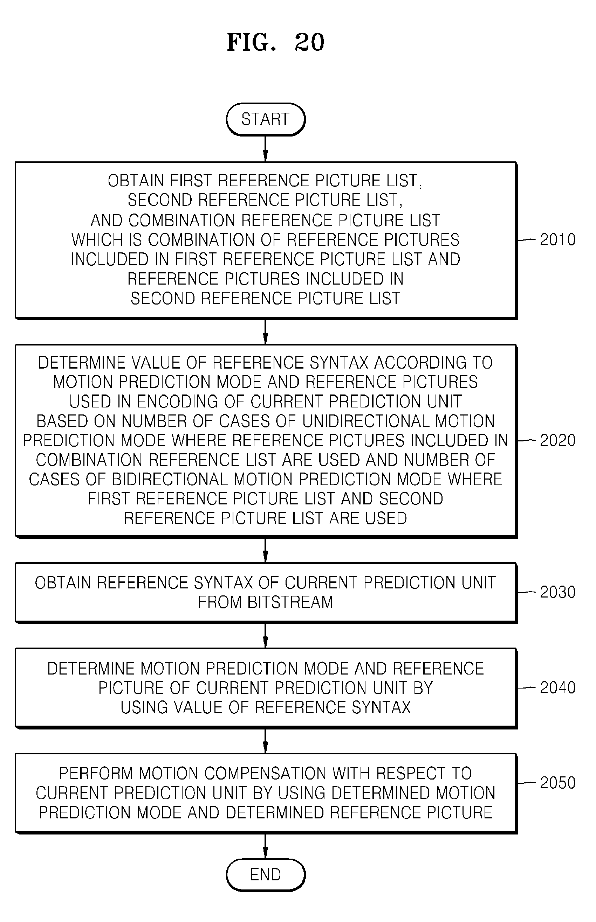

FIG. 20 is a flowchart illustrating an image decoding method according to an embodiment of the present invention.

Referring to FIG. 20, in operation 2010, the entropy decoder 520 obtains a first reference picture list, a second reference picture list, and a combination reference picture list which is a combination of reference pictures included in the first reference picture list and reference pictures included in the second reference picture list. In operation 2020, the entropy decoder 520 determines a value of a reference syntax according to a motion prediction mode and reference pictures used in encoding of the current prediction unit based on a number of cases of a unidirectional motion prediction mode where reference pictures included in the combination reference list are used and a number of cases of a bidirectional motion prediction mode where the first reference picture list and the second reference picture list are used.

In operation 2030, the entropy decoder 520 obtains a reference syntax of the current prediction unit from a bitstream. As described above, the reference syntax may be encoded by a truncated unary binarization method, and which case of the number of cases of prediction modes illustrated in FIG. 17 the current reference syntax indicates may be determined based on the whole number of cases (MaxValue) of prediction modes.

In operation 2040, the entropy decoder 520 may determine a motion prediction mode and a reference picture of the current prediction unit by using a value of the reference syntax, and in operation 2050, the motion compensation unit 560 may perform motion compensation with respect to the current prediction unit by using the determined motion prediction mode and the determined reference picture to generate a prediction value of the current prediction unit.

The invention may also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

While this invention has been particularly shown and described with reference to exemplary embodiments thereof, it will be understood by those of ordinary skill in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

## Claims

1. An image encoding method comprising:

   obtaining a first reference picture list, a second reference picture list, and a combination reference picture list which is a combination of reference pictures included in the first reference picture list and reference pictures included in the second reference picture list;
   encoding a current prediction unit by using one of a unidirectional prediction mode in which unidirectional prediction is performed with respect to the current prediction unit by using a reference picture included in the combination reference picture list and a bidirectional prediction mode in which bidirectional motion prediction is performed with respect to the current prediction unit by using the first reference picture list and the second reference picture list; and

encoding a reference syntax indicating a motion prediction mode and a reference picture used in encoding of the current prediction unit based on a number of cases of the unidirectional motion prediction mode and a number of cases of the bidirectional motion prediction mode.

2. The image encoding method of claim 1, wherein in the encoding of the reference syntax, a reference syntax of a different value is allocated for each of reference pictures available in the unidirectional motion prediction mode and combination of reference pictures available in the bidirectional motion prediction mode, and a value of a reference syntax corresponding to a motion prediction mode of the current prediction unit and reference pictures used in motion prediction of the current prediction unit is encoded.

3. The image encoding method of claim 2, wherein when a number of reference pictures included in the combination reference list is NumOfRef_LC, a number of reference pictures included in the first reference picture list is NumOfRef_L0, a number of reference pictures included in the second reference picture list is NumOfRef_L1, and a number of all cases of unidirectional and bidirectional motion prediction of the current prediction unit is MaxValue, MaxValue has a value determined according to the following equation: Max

$$Value = NumOfRef\_LC + NumOfRef\_L0 * NumOfRef\_L1,$$

wherein one of values from 0 to (Max Value-1) is allocated as the reference syntax for each of reference pictures available in the unidirectional motion prediction mode and combination of reference pictures available in the bidirectional motion prediction mode.

4. The image encoding method of claim 3, wherein when a number of reference pictures that are repeatedly included in the first reference picture list and the second reference picture list is NumOfRedundancy, unrepeated reference pictures of a number of NumOfRe_L0+NumOfRe_L1-NumOfRedundancy are included in the combination reference picture list.

5. The image encoding method of claim 3, wherein when the current prediction unit is unidirectionally motion predicted, a value from 0 to (NumOfRef_LC-1) is encoded as a reference syntax of the current prediction unit according to a reference picture of the combination reference picture list that is referred to by the current prediction unit.

6. The image encoding method of claim 3, wherein when the current prediction unit is bidirectionally motion predicted, a value from NumOfRef_LC to (MaxValue-1) is encoded as a reference syntax of the current prediction unit according to a combination of a first reference picture of the first reference picture list and a second reference picture of the second reference picture list that are referred to by the current prediction unit.

7. The image encoding method of claim 3, wherein when the reference syntax has the value MaxValue, an exceptional case where reference picture of the unidirectional motion prediction mode and a combination of reference pictures of the bidirectional motion prediction mode is not used, is indicated.

8. An image decoding method comprising:

obtaining a first reference picture list, a second reference picture list, and a combination reference picture list which is a combination of reference pictures included in the first reference picture list and reference pictures included in the second reference picture list;

determining a value of a reference syntax according to a motion prediction mode and reference pictures used in encoding of a current prediction unit based on a number of cases of a unidirectional motion prediction mode where reference pictures included in the combination reference list are used and a number of cases of a bidirectional motion prediction mode where the first reference picture list and the second reference picture list are used;

obtaining a reference syntax of the current prediction unit from a bitstream;

determining a motion prediction mode and a reference picture of the current prediction unit by using a value of the obtained reference syntax; and

performing motion compensation with respect to the current prediction unit by using the determined motion prediction mode and the determined reference picture.

9. The image decoding method of claim 8, wherein in the first reference picture list, a reference picture index is allocated in an order from a forward reference picture that is closest to a current picture to a reference picture previous to the forward reference picture, and in the second reference picture list, a reference picture index is allocated to in an order from a backward reference picture that is closest to the current picture to a reference.

10. The image decoding method of claim 8, wherein the reference syntax has a value allocated to each of reference pictures that are available in the unidirectional motion prediction mode and combination of reference pictures that are available in the bidirectional motion prediction mode.

11. The image decoding method of claim 10, wherein when a number of reference pictures included in the combination reference list is NumOfRef_LC, a number of reference pictures included in the first reference picture list is NumOfRef_L0, a number of reference pictures included in the first reference picture list is NumOfRef_L1, and a number of all cases of unidirectional and bidirectional motion prediction of the current prediction unit is MaxValue, MaxValue has a value determined according to the following equation: Max Va!ue=NumOfRef_LC + NumOfRef_L0*NumOfRef_L1, wherein one of values from 0 to (Max Value-1) is allocated as the reference syntax for each of reference pictures available in the unidirectional motion prediction mode and combination of reference pictures available in the bidirectional motion prediction mode.

12. The image decoding method of claim 11, wherein when a number of reference pictures that are repeatedly included in the first reference picture list and the second reference picture list is NumOfRedundancy, unrepeated reference pictures of a number of NumOfRef_L0+NumOfRef_L1-NumOfRedundancy are included in the combination reference picture list.

13. The image decoding method of claim 11, wherein when the current prediction unit is unidirectionally motion predicted, a value from 0 to (NumOfRef_LC-1) is encoded as a reference syntax of the current prediction unit according to a reference picture of the combination reference picture list that is referred to by the current prediction unit.

14. The image decoding method of claim 11, wherein when the current prediction unit is bidirectionally motion predicted, a value from NumOfRef_LC to (MaxValue-1) is encoded as a reference syntax of the current prediction unit according to a combination of a first reference picture of the first reference picture list and a second reference picture of the second reference picture list that are referred to by the current prediction unit.

15. The image decoding method of claim 11, wherein when the reference syntax has the value MaxValue, an exceptional case where reference picture of the unidirectional motion prediction mode and a combination of reference pictures of the bidirectional motion prediction mode is not used, is indicated.

# FIG. 1

100

110 120 130

| MAXIMUM CODING UNIT SPLITTER | CODING UNIT DETERMINER | OUTPUT UNIT |

# FIG. 2

200

210 220 230

| RECEIVER | IMAGE DATA AND ENCODING INFORMATION EXTRACTOR | IMAGE DATA DECODER |

# FIG. 3

| | | | | | |
|---|---|---|---|---|---|
| 64 | 64 | 32 | 32 | | RESOLUTION:1920×1080 |
| 64×64 | 64×32 | 32×64 | 32×32 | | MAXIMUM SIZE OF CODING UNIT:64 MAXIMUM DEPTH=2 |

64 — 64×64

64 — 64×32 (32)

64 — 32×64 (32)

32 — 32×32 (32)

315

RESOLUTION:1920×1080
MAXIMUM SIZE OF
CODING UNIT:64
MAXIMUM DEPTH=2

— 310

32 — 32×32 (32)

32 — 32×16 (16)

32 — 16×32 (16)

16 — 16×16 (16)

RESOLUTION:1920×1080
MAXIMUM SIZE OF
CODING UNIT:64
MAXIMUM DEPTH=3

— 320

16 — 16×16 (16)

16 — 16×8 (8)

16 — 8×16 (16)

8 — 8×8 (8)

RESOLUTION:352×288
MAXIMUM SIZE OF
CODING UNIT:16
MAXIMUM DEPTH=1

8 — 8×8 (8)

8 — 8×4 (4)

8 — 4×8 (8)

4 — 4×4 (4)

— 330

335  325

EP 2 685 722 A2

## FIG. 4

## FIG. 5

```
                                                                                      ┌─500
505                  510              520                530                540

BITSTREAM ──→  PARSER  ──→  ENTROPY  ──→  INVERSE  ──→  INVERSE
                             DECODER      QUANTIZER      TRANSFORMER

595           580              570                550
RESTORED ←─  LOOP      ←─  DEBLOCKING  ←─  INTRA  ←─ INTRA
FRAME        FILTERING UNIT    UNIT          PREDICTOR

                                                    560
                                              MOTION          ←─ INTER
                   REFERENCE ──────────────→  COMPENSATOR
                   FRAME

                   585
```

# FIG. 6

MAXIMUM
CODING
UNIT

MAXIMUM HEIGHT AND
MAXIMUM WIDTH OF
CODING UNIT = 64        MAXIMUM DEPTH=5

600

64    610

64

64×64

64    612

32

64×32

32    614

64

32×64

32    616

32

32×32

PREDICTION
UNIT/
PARTITION

32    620

32

32×32

32    622

16

32×16

16    624

32

16×32

16    626

16

16×16

16    630

16

16×16

16    632

8

16×8

8    634

16

8×16

8    636

8

8×8

8    640

8

8×8

8    642

4

8×4

4    644

8

4×8

4    646

4

4×4

MINIMUM
CODING
UNIT

4    650

4

4×4

4    652

2

4×2

2    654

4

2×4

2    656

2

2×2

DEEPER CODING UNITS

# FIG. 7

CODING UNIT (710)    TRANSFORMATION UNIT (720)

64

64    64×64

32

32    32×32

# FIG. 8

PARTITION TYPE (800)

2N ⁄802    2N ⁄804    N ⁄806    N ⁄808

2N    CU_0

64×64

N    0

1

2N    0    1

N    0    1

2    3

PREDICTION MODE (810)

⁄812    ⁄814    ⁄816

INTRA MODE    INTER MODE    SKIP MODE

SIZE OF TRANFORMATION UNIT (820)

⁄822    ⁄824    ⁄826    ⁄828

INTRA    INTER

FIG. 9

DEPTH=0

2N_0

2N_0 | CU_0 | (900)

2N_0 (910)   SPLIT (920)

2N_0
2N_0 | | (912)

2N_0
N_0 | 0 / 1 | (914)

N_0
2N_0 | 0 | 1 | (916)

N_0
N_0 | 0 | 1 / 2 | 3 | (918)

0 | 1 / 2 | 3 | (930)

DEPTH=1

2N_1

2N_1 | CU_1 | (930)

2N_1 (940)   SPLIT (950)

2N_1
2N_1 | | (942)

2N_1
N_1 | 0 / 1 | (944)

N_1
2N_1 | 0 | 1 | (946)

N_1
N_1 | 0 | 1 / 2 | 3 | (948)

0 | 1 / 2 | 3 | (960)

SPLIT (970)

DEPTH=d-1

2N_(d-1)

2N_(d-1) | CU_(d-1) | (980)

2N_(d-1) (990)

2N_(d-1)
2N_(d-1) | | (992)

2N_(d-1)
N_(d-1) | 0 / 1 | (994)

N_(d-1)
2N_(d-1) | 0 | 1 | (996)

N_(d-1)
N_(d-1) | 0 | 1 / 2 | 3 | (998)

2N_d

2N_d | | (999)

EP 2 685 722 A2

# FIG. 10

CODING UNIT (1010)

# FIG. 11

PREDICTION UNIT (1060)

## FIG. 12

1014—

—1016

—1022

1032

—1048

—1054

1050

1052

TRANSFORMATION UNIT(1070)

FIG. 13

CU

1300

| 1302 | 1312 | 1314 |
| | 1316 | 1318 |
| 1304 | 1306 | |

PU

| 1322 | 1324 | 1326 | 1328 | 1332 | 1334 | 1336 | 1338 |
| 2Nx2N | 2NxN | Nx2N | NxN | 2NxnU | 2NxnD | nLx2N | nRx2N |

TU

TU size flag=0 — 1342

TU size flag=1 — 1344

TU

TU size flag=0 — 1352

TU size flag=1 — 1354

# FIG. 14

REFERENCE PICTURE A  REFERENCE PICTURE B  CURRENT PICTURE  REFERENCE PICTURE C  REFERENCE PICTURE D

POC

n-2    n-1    n    n+1    n+2

EP 2 685 722 A2

# FIG. 15A

|        | 1520 |      | 1510 CURRENT PICTURE | 1530 |      |
|--------|------|------|----------------------|------|------|
|        | Ref 1 | Ref 2 |                      | Ref 4 | Ref 5 |
| L0_idx | 1    | 0    |                      | 2    | 3    |
| L1_idx | 3    | 2    |                      | 0    | 1    |

EP 2 685 722 A2

# FIG. 15B

L0_idx

List 0

| Ref 2 | 0 |
| Ref 1 | 1 |
| Ref 4 | 2 |

# FIG. 15C

L1_idx

List 1

| Ref 4 | 0 |
| Ref 5 | 1 |
| Ref 2 | 2 |

# FIG. 16A

COMBINATION
REFERENCE          REFERENCE
PICTURE LIST (1630)    INDEX

List 0 (1610)          List 1 (1620)

| Ref 2 | Ref 4 | Ref 2 | 0 |
| Ref 1 | Ref 5 | Ref 4 | 1 |
| Ref 4 | Ref 2 | Ref 1 | 2 |
| | | Ref 5 | 3 |

COMBINE

1611                   1621

# FIG. 16B

1640

COMBINATION LIST    REFERENCE
(1650)              INDEX

| | Ref 2 | Ref 2 | 0 |
| List 0 | Ref 1 | Ref 1 | 1 |
| | Ref 4 | Ref 4 | 2 |
| | Ref 4 | Ref 5 | 3 |
| List 1 | Ref 5 | | |
| | Ref 2 | | |

COMBINE

1641
1642

# FIG. 17

| | | | | | | | | | | |
|---|---|---|---|---|---|---|---|---|---|---|
| NumOfRef_LC=1 | MaxVal=1 (L0=1, L1=1) 1710 | Value | 0 | 1 | | | | | | |
| | | InterDir | LC | BI | | | | | | |
| | | RefIDx | 0 | (0,0) | | | | | | |
| NumOfRef_LC=2 | MaxVal=2 (L0=1, L1=1) 1720 | Value | 0 | 1 | 2 | | | | | |
| | | InterDir | LC | LC | BI | | | | | |
| | | RefIDx | 0 | 1 | (0,0) | | | | | |
| NumOfRef_LC=2 | MaxVal=3 (L0=2, L1=1) 1730 | Value | 0 | 1 | 2 | 3 | | | | |
| | | InterDir | LC | LC | BI | BI | | | | |
| | | RefIDx | 0 | 1 | (0,0) | (1,0) | | | | |
| NumOfRef_LC=2 | MaxVal=3 (L0=1, L1=2) 1740 | Value | 0 | 1 | 2 | 3 | | | | |
| | | InterDir | LC | LC | BI | BI | | | | |
| | | RefIDx | 0 | 1 | (0,0) | (0,1) | | | | |
| NumOfRef_LC=3 | MaxVal=4 (L0=2, L1=1) 1750 | Value | 0 | 1 | 2 | 3 | 4 | | | |
| | | InterDir | LC | LC | LC | BI | BI | | | |
| | | RefIDx | 0 | 1 | 2 | (0,0) | (1,0) | | | |
| NumOfRef_LC=3 | MaxVal=4 (L0=1, L1=2) 1760 | Value | 0 | 1 | 2 | 3 | 4 | | | |
| | | InterDir | LC | LC | LC | BI | BI | | | |
| | | RefIDx | 0 | 1 | 2 | (0,0) | (0,1) | | | |
| NumOfRef_LC=2 | MaxVal=5 (L0=2, L1=2) 1770 | Value | 0 | 1 | 2 | 3 | 4 | 5 | | |
| | | InterDir | LC | LC | BI | BI | BI | BI | | |
| | | RefIDx | 0 | 1 | (0,0) | (0,1) | (1,0) | (1,1) | | |
| NumOfRef_LC=3 | MaxVal=6 (L0=2, L1=2) 1780 | Value | 0 | 1 | 2 | 3 | 4 | 5 | 6 | |
| | | InterDir | LC | LC | LC | BI | BI | BI | BI | |
| | | RefIDx | 0 | 1 | 2 | (0,0) | (0,1) | (1,0) | (1,1) | |
| NumOfRef_LC=4 | MaxVal=7 (L0=2, L1=2) 1790 | Value | 0 | 1 | 2 | 3 | 4 | 5 | 6 | 7 |
| | | InterDir | LC | LC | LC | LC | BI | BI | BI | BI |
| | | RefIDx | 0 | 1 | 2 | 3 | (0,0) | (0,1) | (1,0) | (1,1) |

# FIG. 18

| Value | REFERENCE INDEX |
|-------|-----------------|
| 0 | 0 |
| 1 | 1 0 |
| 2 | 1 1 0 |
| 3 | 1 1 1 0 |
| 4 | 1 1 1 1 0 |
| 5 | 1 1 1 1 1 0 |
| 6 | 1 1 1 1 1 1 0 |
| 7 | 1 1 1 1 1 1 1 |

# FIG. 19

START

OBTAIN FIRST REFERENCE PICTURE LIST,
SECOND REFERENCE PICTURE LIST,
AND COMBINATION REFERENCE PICTURE LIST
WHICH IS PICTURE LIST AND REFERENCE PICTURES
INCLUDED IN FIRST REFERENCE PICTURE LIST AND
REFERENCE PICTURES INCLUDED IN
SECOND REFERENCE PICTURE LIST — 1910

ENCODE CURRENT PREDICTION UNIT USING ONE OF
UNIDIRECTIONAL MOTION PREDICTION MODE WHERE
UNIDIRECTIONAL MOTION PREDICTION WITH RESPECT TO
A CURRENT PREDICTION UNIT IS PERFORMED BY
USING A REFERENCE PICTURE INCLUDED IN THE
COMBINATION REFERENCE PICTURE LIST AND
BIDIRECTIONAL MOTION PREDICTION MODE WHERE
BIDIRECTIONAL MOTION PREDICTION WITH RESPECT TO
CURRENT PREDICTOIN UNIT IS PERFORMED BY
USING THE FIRST REFERENCE PICTURE LIST AND
THE SECOND REFERENCE PICTURE LIST — 1920

ENCODE REFERENCE SYNTAX INDICATING MOTION
PREDICTION MODE AND REFERENCE PICTURE USED IN
ENCODING OF CURRENT PREDICTION UNIT BASED ON
NUMBER OF CASES OF UNIDIRECTIONAL MOTION
PREDICTION MODE AND NUMBER OF CASES OF
BIDIRECTIONAL MOTION PREDICTION MODE — 1930

END

# FIG. 20

START

OBTAIN FIRST REFERENCE PICTURE LIST,
SECOND REFERENCE PICTURE LIST,
AND COMBINATION REFERENCE PICTURE LIST
WHICH IS COMBINATION OF REFERENCE PICTURES
INCLUDED IN FIRST REFERENCE PICTURE LIST AND
REFERENCE PICTURES INCLUDED IN
SECOND REFERENCE PICTURE LIST — 2010

DETERMINE VALUE OF REFERENCE SYNTAX ACCORDING TO
MOTION PREDICTION MODE AND REFERENCE PICTURES
USED IN ENCODING OF CURRENT PREDICTION UNIT
BASED ON NUMBER OF CASES OF UNIDIRECTIONAL MOTION
PREDICTION MODE WHERE REFERENCE PICTURES INCLUDED IN — 2020
COMBINATION REFERENCE LIST ARE USED AND NUMBER OF
CASES OF BIDIRECTIONAL MOTION PREDICTION MODE WHERE
FIRST REFERENCE PICTURE LIST AND SECOND
REFERENCE PICTURE LIST ARE USED

OBTAIN REFERENCE SYNTAX OF CURRENT PREDICTION UNIT
FROM BITSTREAM — 2030

DETERMINE MOTION PREDICTION MODE AND REFERENCE
PICTURE OF CURRENT PREDICTION UNIT BY — 2040
USING VALUE OF REFERENCE SYNTAX

PERFORM MOTION COMPENSATION WITH RESPECT TO
CURRENT PREDICTION UNIT BY USING DETERMINED MOTION — 2050
PREDICTION MODE AND DETERMINED REFERENCE PICTURE

END